(19) Europäisches Patentamt
European Patent Office
Office européen des brevets

(11) EP 1 933 545 A1

(12) **EUROPEAN PATENT APPLICATION**

(43) Date of publication:
**18.06.2008 Bulletin 2008/25**

(51) Int Cl.:
*H04N 1/21* (2006.01)     *H04N 5/232* (2006.01)
*G02B 27/64* (2006.01)

(21) Application number: **07254876.1**

(22) Date of filing: **14.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **15.12.2006 JP 2006337789**

(71) Applicant: **Ricoh Company, Ltd.**
**Tokyo 143-8555 (JP)**

(72) Inventor: **Matsutani, Atsushi**
**Tokyo 143-8555 (JP)**

(74) Representative: **Leeming, John Gerard**
**J.A. Kemp & Co.**
**14 South Square**
**Gray's Inn**
**London WC1R 5JJ (GB)**

(54) **Imaging apparatus control method thereof and a computer program**

(57) An exposed image from a CCD (101) is loaded repeatedly to each plane of a SDRAM (103) by turns and a latest image after loading is displayed. For example, when an image is forwarded, a previous image is displayed. When forwarding begins, a next exposure is also started and a displayed image is switched as well. From a beginning point of a release of mechanical retention of an image-blur compensator, updating of the displayed image of an LCD monitor (1') is stopped. Switching of a next image and the forwarding of an exposed image from the CCD (101) to the SDRAM (103) are prohibited. From an ending point of the release of the mechanical retention, a next exposed image is forwarded from the CCD (101) to the SDRAM (103) and the updating of the displayed image to the image forwarded to the SDRAM (103) on a display apparatus is allowed. Hereby, it is possible to display an image without an incongruity such as an image shift and so on when a retention is released, and at the same time it is also possible to determine a gravity direction by information on a position of a retention mechanism.

# FIG.1A

DIGITAL STILL CAMERA BODY 1000

RELEASE SWITCH SW1

MODE DIAL SWITCH SW2

SUB LCD 1

EP 1 933 545 A1

**Description**

The present invention relates to an imaging apparatus having image-blur suppression function which compensates a camera shake when photographing, and to a control method thereof.

In recent years, the automation of imaging apparatus such as still cameras video cameras and so on has been advanced and the mechanisms such as auto-exposure, auto-focus adjustment and so on have been widely in practical use. As one of these multi-functions, some of the technologies, to realize an image-blur suppression which compensates an image-blur caused by a shake of a whole apparatus body, have been in practical use.

A shake prevention apparatus having these shake compensation functions generally includes a shake detector, an optical compensator, a driver, a controller and a retainer. The shake detector detects a shake of a whole apparatus body. The optical compensator compensates an image-blur caused by the shake. The driver drives the optical compensator. The controller controls the driver by calculating an image-blur compensation amount according to an output of the shake detector. The retainer mechanically retains the optical compensator at a predetermined position.

For example, Japanese patent publication No. 2001-066655 discloses to perform a shake compensation, by detecting a shake amount of an imaging apparatus caused by a shake of hands, detecting a displacement amount of a substrate having a photoelectric converter when the board having the photoelectric converter is displaced according to the detected shake amount, and compensating the shake amount by the detected displacement amount so as to displace the board having the photoelectric converter.

In addition, Japanese patent registration No. 3188739 discloses to provide a mechanical retainer and an electric retainer. The mechanical retainer mechanically retains an optical compensator at a predetermined position, and the electric retainer operates at the time when a state of the mechanical retainer changes and retains the optical compensator at a predetermined position. When the state of the mechanical retainer is changed, i.e., when the optical compensator is retained and when the optical compensator is released from a retained state for example, the electric retainer is operated to enable the retaining of the optical compensator by the mechanical retainer and to prevent the optical compensator from displacing from the predetermined position and so on, so as to avoid the image to be shifted.

In this respect, "electric retention" or the "electric retainer" may continuously retain the optical compensator at the predetermined position while the driver is being electrified. The "mechanical retention" or the "mechanical retainer" may continuously retain the optical compensator in the predetermined position even though the driver is not electrified. It is to be noted that the mechanical retainer includes not only a mechanical retainer involving no electrical control at all, but also a mechanical retainer involving an electrical control when the mechanical retainer is converted to the state in which the mechanical retainer retains the optical compensator in the predetermined position, or when the mechanical retainer is converted to the state in which the mechanical retainer releases the optical compensator from being retained thereby.

An embodiment of the Japanese Patent Publication No. 2005-323405 discloses a method of determining a gravity direction by a magnitude of a driving force.

A shake prevention apparatus having these structures as described above, which mounts a gravity direction sensor, so that an innovation is needed to determine the gravity direction.

An object of the present invention is to provide an imaging apparatus having an image-blur suppression function to determine the gravity direction by use of a direction of free-fall of the optical compensator and a control method thereof.

An imaging apparatus having an image-blur suppression function, the imaging apparatus: according to the present invention includes a body; an image pickup device which captures an image; a display which displays the image from the image pickup device; a shake detector which detects a shake applied to the body; an optical compensator which compensates an image-blur occurred by the shake; a position detector which detects a position of the optical compensator, a driver which drives the optical compensator according to an output from the shake detector and an output from the position detector; a mechanical retainer which mechanically retains the optical compensator at a predetermined position; and a processor which stops updating of the image displayed on the display when the mechanical retaining of the optical compensator by the mechanical retainer is released from a state in which the optical compensator is retained at the predetermined position by the mechanical retainer and in which the driver is stopped so as not to perform a compensation operation of the optical compensator, and which detects the position of the optical compensator with the position detector during a period in which the updating of the image displayed on the display is stopped.

Preferably, the processor retains plural pieces of information on the position of the optical compensator detected during the period in which the updating of the image displayed on the display is stopped.

Preferably, the processor determines a gravity direction by using the retained plural pieces of the information.

Preferably, the processor determines the gravity direction in a first release condition in which a release switch is half-pressed on in a second release condition in which the release switch is further pressed from the first release condition.

Preferably, the processor cancels the determination of the gravity direction when the output from the shake detector exceeds a predetermined range of value.

A method for controlling an imaging apparatus having an image-blur suppression function, the method according to the present invention includes, preparing the imaging apparatus having: a body; an image pickup device which captures an image; a display which displays the image from the image pickup device; a shake detector which detects a shake applied to the body; an optical compensator which compensates an image-blur occurred by the shake; a position detector which detects a position of the optical compensator; a driver which drives the optical compensator according to an output from the shake detector and an output from the position detector and a mechanical retainer which mechanically retains the optical compensator at a predetermined position, stopping updating of the image displayed on the display when the mechanical retaining of the optical compensator by the mechanical retainer is released from a state in which the optical compensator is retained at the predetermined position by the mechanical retainer and in which the driver is stopped so as not to perform a compensation operation of the optical compensator, and detecting the position of the optical compensator with the position detector during a period in which the updating of the image displayed on the display is stopped.

Preferably, the control method further includes retaining plural pieces of information on the position of the optical compensator detected during the period in which the updating of the image displayed on the display is stopped.

Preferably, the control method further includes determining a gravity direction by using the retained plural pieces of the information.

Preferably, the determining the gravity direction is performed in a first release condition in which a release switch is half-pressed or in a second release condition in which the release switch is further pressed form the first release condition.

Preferably, the determining the gravity direction is cancelled when the output from the shake detector exceeds a predetermined range of value.

In the following, the present invention is explained in greater detail by means of several exemplary preferred embodiments thereof in conjunction with the accompanying drawings. Note that the accompanying drawings are included to provide a further understanding of the invention, and are incorporated in and constitute a part of this description. The drawings illustrate embodiments of the invention and, together with the description, serve to explain the principles of the invention.

FIG 1A is a top view of an exterior of a digital still camera body according to an embodiment of the present invention.

FIG. 1B is a front view of the exterior of the digital still camera body according to an embodiment of the present invention.

FIG 1C is a back view of the exterior of the digital still camera body according to an embodiment of the present invention.

FIG. 2 is a block circuit diagram illustrating a schematic system structure of an interior of the digital camera.

FIG 3 is a flowchart explaining two modes of general operations of the digital camera.

FIG 4A is a flowchart of a countdown timer illustrating an operation of a timer function.

FIG 4B is a flowchart of a free-run timer illustrating the operation of the timer function.

FIG 5 is a view explaining a principle for suppressing an image-blur.

FIG 6 is a front view illustrating a fixed barrel of a lens barrel of the digital camera.

FIG. 7 is a vertical cross-sectional view of FIG 6 taken along the line A-A'.

FIG 8A is a back view of the fixed barrel.

FIG 8B is the back view of the fixed barrel except a flexible printed substrate.

FIG. 9 is an exploded perspective view of a CCD stage.

FIG. 10 is a vertical cross-sectional view of FIG 8B taken along the line B-B'.

FIG 11A is an explanation view illustrating a chief portion of a forced retention mechanism and a perspective view illustrating connection relationship among the CCD stage, a stepping motor and a conversion mechanism.

FIG 11B is a perspective view illustrating a partly enlarged conversion mechanism.

FIG. 12A is a pattern diagram of a cam groove of a rotation transferring gear and presenting a bottom plane view of the rotation transferring gear.

FIG. 12B is a cross-sectional view of FIG. 12A taken along the line C-C'.

FIG 12C illustrates a state that a cam pin slides the inclined surface, and the rotation transferring gear is pushed up.

FIG 12D illustrates a state that the cam pin has contact with the flat top portion, and the transferring gear is pushed up at maximum.

FIG. 12E illustrates a state that the cam pin passes through a cliff to have contact with a flat valley floor portion, and the transferring gear is pushed down at maximum.

FIG 13A is an explanation view for explaining a state that a press pin is fitted to a recess portion, and presenting a state that the press pin is closely fitted to a peripheral wall of the recess portion.

FIG. 13B illustrates a partly enlarged cross-sectional view presenting a state that press pin is separated from the peripheral wall of the recess portion.

FIG 14 illustrates a view presenting a relationship between a focal length of a lens and a shift amount.

FIG 15 illustrates a diagram presenting a relationship between an image-blur angle and a CCD compensation movement amount.

FIG. 16A illustrates a control cycle of a servo control of the CCD and presenting when the control cycle is 0.0001[s].

FIG .16B illustrates the control cycle of the servo control of the CCD and presenting when the control cycle is 0.000005[s].

FIG 17 is a flowchart of the image-blur suppression step.

FIG 18 is a diagram presenting the CCD moving to a target position.

FIG 19 is a flowchart of steps when photographing.

FIG 20 is a timing chart at an exposure.

FIG 21 illustrates FIG 20 in detail.

FIG. 22A is a flowchart of a countdown timer illustrating an operation of a timer function.

FIG 22B is a flowchart of a free-run timer illustrating the operation of the timer function.

FIG. 23 is a diagram presenting the CCD moving to a target position.

FIG 24 is a flowchart of the image-blur suppression step.

FIG 25 is a timing chart at an exposure.

FIG.26 is an explanation view that explains a ground being on the basis of $2 \times T$ in "Values of all the count down timers $> 2 \times T$"

FIG 27 illustrates a flow of monitoring images.

Reference will now be made in detail to the present preferred embodiments of the invention, examples of which are illustrated in the accompanying drawings. Wherever possible, the same reference numbers are used in the drawings and the description to refer to the same or like parts. The scope of the present invention, however, is not limited to these embodiments. Within the scope of the present invention, any structure and material described below can be appropriately modified.

Hereinafter, referring to the drawings, some embodiments according to the present invention will be explained in detail.

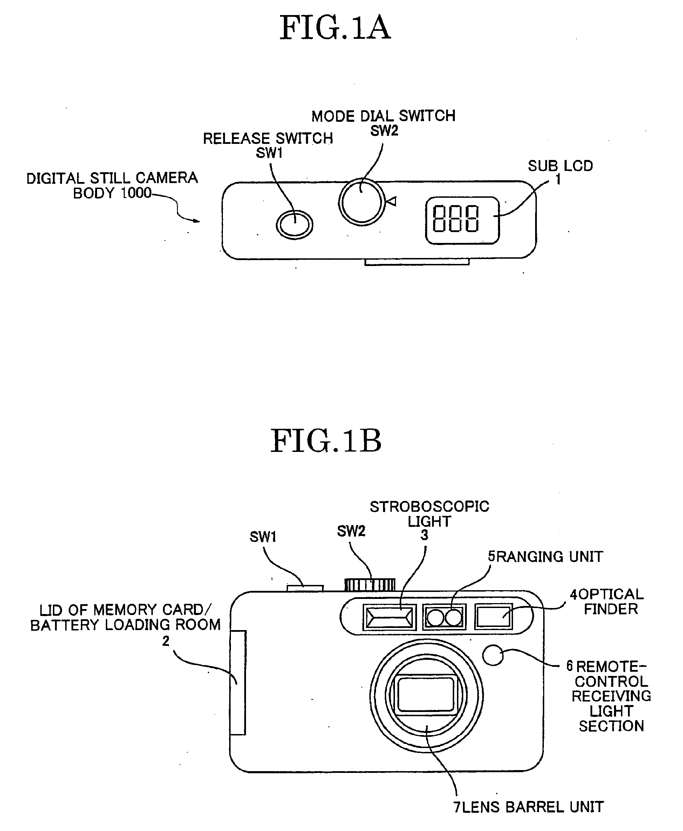

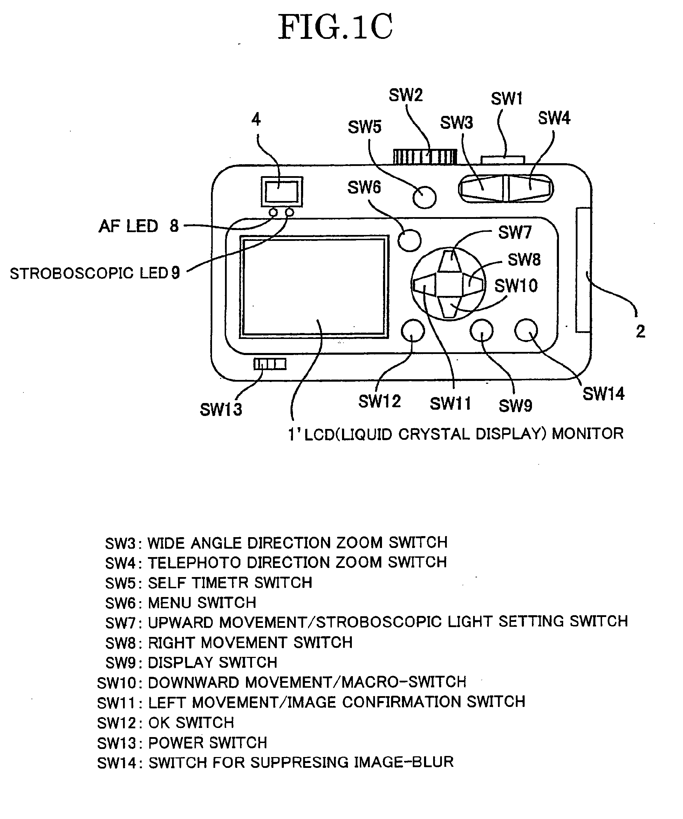

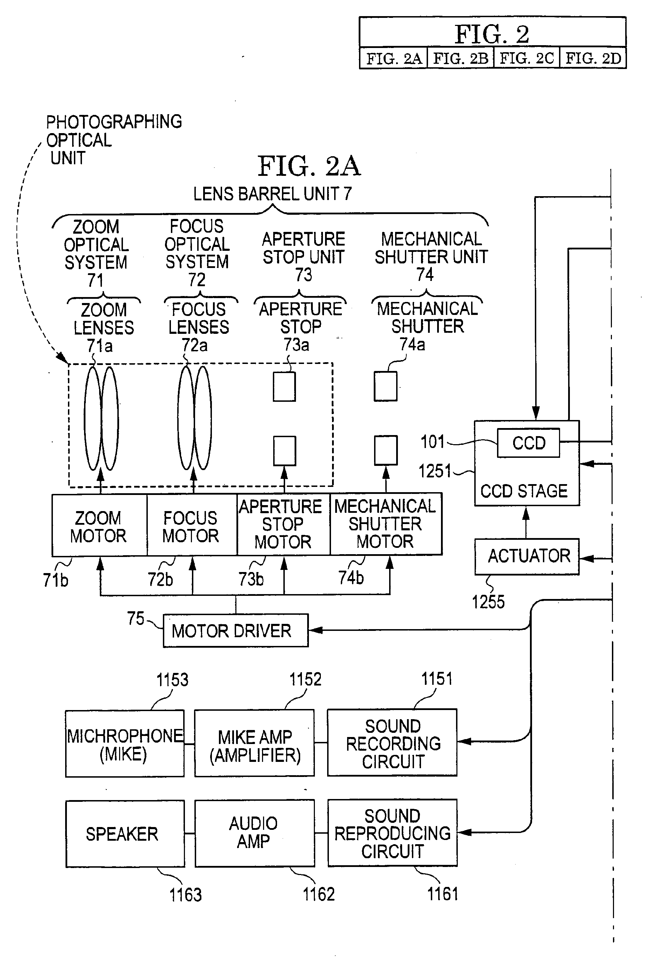

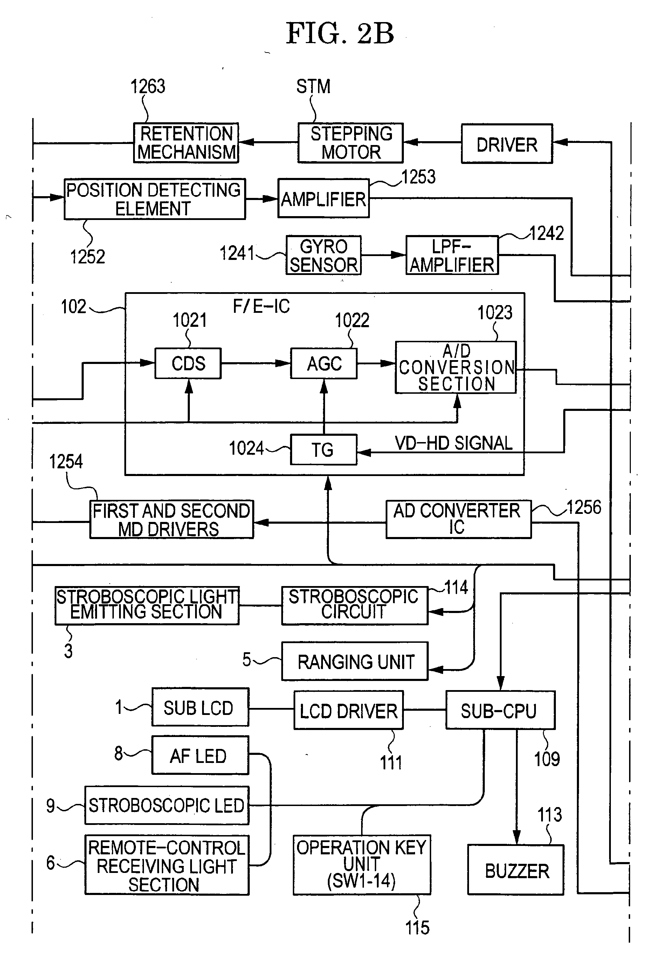

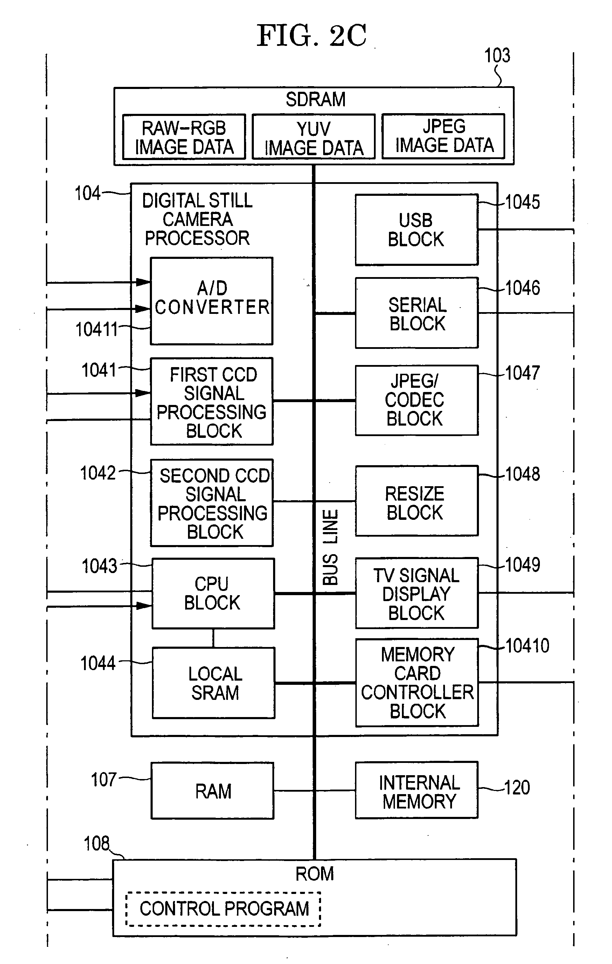

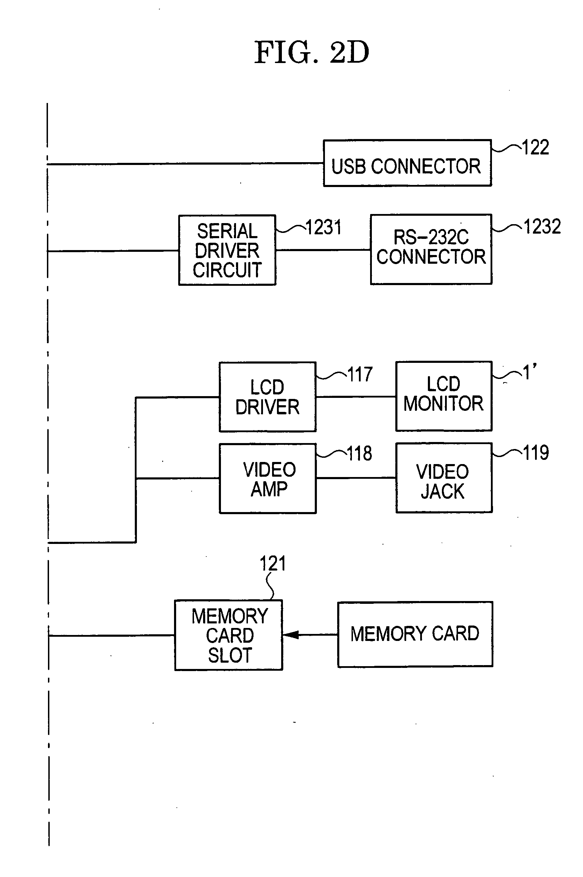

FIG 1A is a top view illustrating a digital still camera (hereinafter, referred to as a digital camera) as an imaging apparatus according to the present invention, FIG. 1B is a front view thereof, FIG. 1C is a back view thereof, and FIG. 2 is a block circuit diagram illustrating a schematic system structure of the digital camera interior.

As illustrated in FIG. 1A, a camera body 1000 has a top plane (the top plane when the subject side is the front plane) provided with a release switch (release shutter) SW1, a mode dial SW2, and a sub LCD (Liquid Crystal Display) 1.

The camera body has a front plane (subject side) provided with a lens barrel unit 7 including a photographing lens, an optical finder 4, a stroboscopic light emitting section 3, a ranging unit 5, and a remote control light receiving section 6.

The camera has a back plane (photographer's side), provided with a power switch SW13, an LCD monitor 1', an AFLED 8, a stroboscopic LED 9, a wide angle direction zoom switch SW3, a telephoto direction zoom switch SW4, a self timer setting/releasing switch SW5, a menu switch SW6, an upward movement/stroboscopic light setting switch SW7, a right movement switch SW8, a display switch SW9, a downward movement/macro-switch SW10, a left movement/ image confirmation switch SW11, an OK switch SW12, and a switch for suppressing an image-blur SW14. The camera body has a side plane provided with a lid 2 of memory card/battery loading room.

Since the functions and actions of each member of digital camera are well-known, the explanations thereof are not described in detail. Next, the system structure of camera interior will be explained based on FIG 2, referring to FIG. 1.

As illustrated in FIG 2, reference number 104 denotes a digital still camera processor (hereinafter, referred to as a processor). The processor 104 has an A/D converter 10411, a first CCD signal processing block 1041, a second CCD signal processing block 1042, a CPU block 1043, a local SRAM 1044, an USB block 1045, a serial block 1046, a JPEG/CODEC block (JEPG compression/decompression block) 1047, a RESIZE block (block which expands and reduces size of image data by an interpolating process) 1048, a TV signal display block (block which converts image data to a video signal for displaying on an external display device such as a liquid crystal monitor or TV) 1049, and a memory card controller block (block which conducts control of a memory card for recording photographing image data) 10410. Each of the blocks is connected each other via a bus line.

Disposed in the outside of the processor 104 is a SDRAM 103 for storing RAW-RGB image data (image data that white balance setting and $\gamma$ setting are performed), YUV image data (image data that luminance data and color difference data conversion are performed), and JPEG image data (image data that JPEG compression is performed), which is connected to the processor 104 via a memory controller (not shown) and a bus line.

In addition, disposed in the outside of the processor 104 is a RAM 107, an internal memory 120 (a memory which stores photographing image data when a memory card is not installed in a memory card slot), and a ROM 108 having a control program, parameter, etc., stored therein, which are connected to the processor 104 via a bus line.

The control program stored in the ROM 108 is loaded in the main memory (not shown) of the processor 104 when turning on the power switch SW13 of camera. The processor 104 controls the operation of each section according to the control program and also temporarily stores the control data, parameters, etc., in the RAM 107 or the like.

The lens barrel unit 7 has a lens barrel including a zoom optical system 71 having a zoom lens 71a, a focus optical system 72 having a focus lens 72a, an aperture stop unit 73 having an aperture stop 73a, and a mechanical shutter unit 74 having a mechanical shutter 74a. In addition, a photographing optical system is structured by the zoom lens 71a, the focus lens 72a and the aperture stop 73a. A light axis of the photographing optical system is a Z axis and a plane perpendicular to the Z axis is an X-Y plane.

The zoom optical system 71, the focus optical system 72, the aperture stop unit 73, and the mechanical shutter unit 74 are driven by a zoom motor 71b, a focus motor 72b, an aperture stop motor 73b, and a mechanical shutter motor 74b, respectively.

Each motor of this lens barrel unit 7 is driven by a motor driver 75, and the motor driver 75 is controlled by the CPU block 1043 of the processor 104.

A subject image is imaged onto the CCD 101 by each of the lens systems of lens barrel unit 7, and the CCD 101 converts the subject image into an image signal to output the image signal to an F/E-IC 102. The F/E-IC 102 has a CDS 1021 which performs correlated double sampling for eliminating image noise, an AGC 1022 for gain adjustment, and an A/D conversion section 1023 which conducts analog/digital conversion. More specifically, F/E-IC 102 conducts a predetermined process to the image signal to convert the analog image signal to the digital signal, and output the digital signal to the first CCD signal processing block 1041 of the processor 104.

These signal control processes are performed via a TG 1024 by a VD (vertical synchronization)-HD (horizontal synchronization) signal output from the first CCD signal processing block 1041 of processor 104. The TG 1024 generates a driving timing signal based on the VD-HD signal.

The CPU block 1043 of processor 104 is configured to control sound recording operation by a sound recording circuit 1151. A sound is converted to a sound recording signal by a microphone (hereinafter, referring to as a mike) 1153 and amplified by a mike AMP (amplifier) 1152. The sound recording circuit 1151 records the amplified signal according to a command. The CPU block 1043 controls operation of a sound reproducing circuit 1161. The sound reproducing circuit 1161 is structured to reproduce a sound signal appropriately stored in a memory by a command and outputs the sound signal to an audio AMP 1162 so as to output the sound from a speaker 1163.

The CPU block 1043, in addition, controls a stroboscopic circuit 114 so as to flash illumination light from the stroboscopic light emitting section 3. The CPU block 1043 also controls the ranging unit 5.

The CPU block 1043 is connected to a sub CPU 109 of the processor 104. The sub CPU 109 controls the display by the sub LCD 1 via an LCD driver 117. The sub CPU 109 is also connected to the AFLED8, stroboscopic LED 9, remote control light receiving section 6, operation key unit having the operation switches SW1-SW14 and a buzzer 113.

The USB block 1045 is connected to a USB connector 122. The serial block 1046 is connected to an RS-232C connector 1232 via a serial driver circuit 1231. The TV signal display block 1049 is connected to the LCD monitor 1' through the LCD driver 117, and also connected to a video jack (jack which connects the camera to an external display device such as TV) 119 via a video AMP (AMP (amplifier) which converts a video signal output from the TV signal display block 1049 into 75Ω impedance) 118. The memory card controller block 10410 is connected to the contact point with the card contact point of a memory card slot 121.

The LCD driver 117 drives the LCD monitor 1' and also converts the video signal output from the TV signal display block 1049 into a signal for displaying onto the LCD monitor 1'. The LCD monitor 1' is used for monitoring a subject condition before photographing, confirming a photographed image and displaying image data recorded in a memory card or an internal memory.

The digital camera has the body provided with a fixed barrel structuring a part of the lens barrel unit 7. The fixed barrel is provided with a CCD stage 1251 capable of moving in the X-Y direction. The CCD 101 is installed in the CCD stage 1251 structuring a part of mechanism for compensating an image blur. The details of mechanical structure of the CCD stage 1251 will be described later.

The CCD stage 1251 is driven by an actuator 1255, and the driving of actuator 1255 is controlled by a driver 1254. The driver 1254 includes a coil drive first MD and a coil drive second MD. The driver 1254 is connected to an AD (analog/digital) converter IC 1256 which is connected to a ROM 108. The control data is input to the AD converter IC1256 from the ROM 108.

The fixed barrel is provided with a retention mechanism 1263 which forcibly retains the CCD stage 1251 to the central position (the original position) when the image-blur suppression switch SW14 is powered off or the power switch SW13 is powered off. The retention mechanism 1263 is controlled by a stepping motor STM as an actuator, which is driven by a driver 1261. The control data is input to the driver 1261 from the ROM 108.

The CCD stage 1251 is provided with a position detection element 1252. The detection output of position detection element 1252 is input to an amplifier 1253 to be amplified, and then is input to the A/D converter 10411. The camera body is provided with a gyro sensor 1241, which can detect the rotation of camera in the pitch direction and yaw direction. The detection output of the gyro sensor 1241 is inputted to the A/D converter 10411 via an LPF-amplifier 1242 which is also used as a low pass filter.

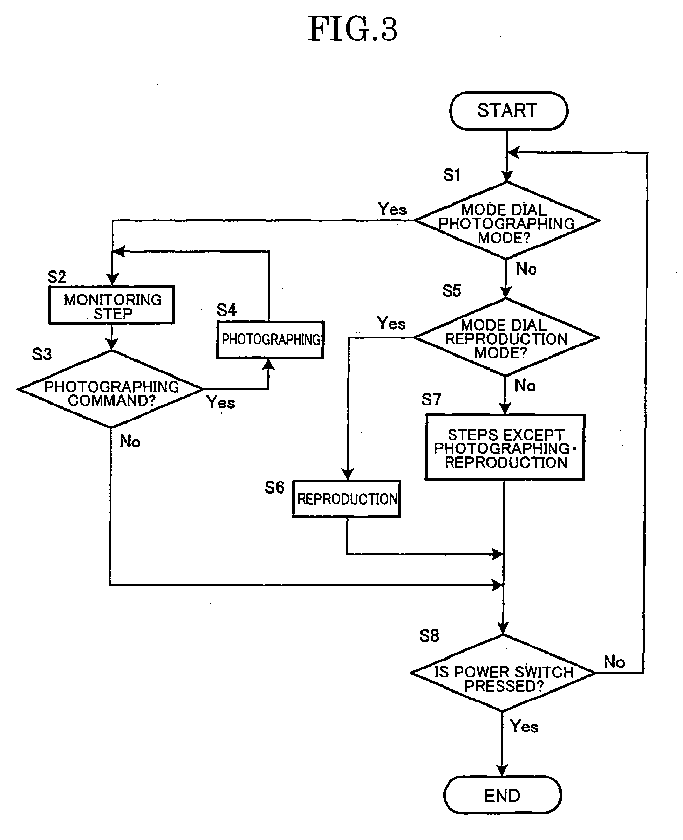

This digital camera, as illustrated in FIG 3, has at least two modes such as a "monitoring step" block and a "reproduction step" block and transits between the two modes. In the "monitoring step" block, it is possible to call up a menu and change each setting. In the "reproduction step" block, it is possible to display photographed images on the LCD monitor 1'.

In other words, as illustrated in a flowchart of FIG 3, at first, it is determined if a mode dial switch SW2 is set to a photographing mode or not (S1). When the mode dial switch SW2 confirms that the photographing mode is being set (Yes of the step S1) and then monitoring step is performed (S2). After the monitoring step, it is determined if a photographing command is outputted or not (S3). When it is outputted (Yes of the step S2), the photographing step is performed (S4) and then a process is moved back to the step S2. When the photographing command is not inputted (No of the step S2), and a process is moved to the step S8 described later.

In the step S1, when the mode dial switch is not set to the photographing mode (No of the step S1), it is additionally determined if the mode dial switch is set to a reproducing mode or not (S5). When the reproducing mode is set (Yes of the step S5), the reproducing step, displaying a photographed image on the LCD monitor (S6) is performed. When the reproducing mode is not set, a step except the photographing and reproducing is performed (S7).

After the steps S3, S6 and S7, it is determined if the power switch SW13 is pressed or not (S8). When it is pressed (Yes of the step S1), the step is over. When it is not pressed (No of the step S8), and a process is moved to the step S1 and the step continues.

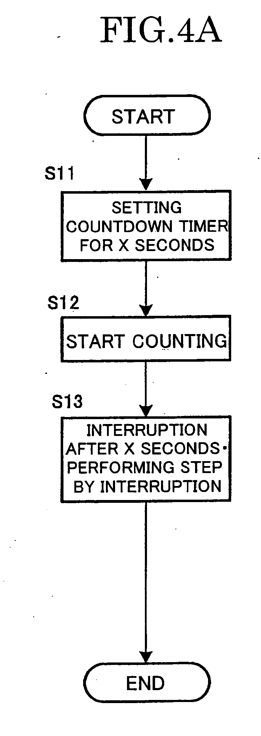

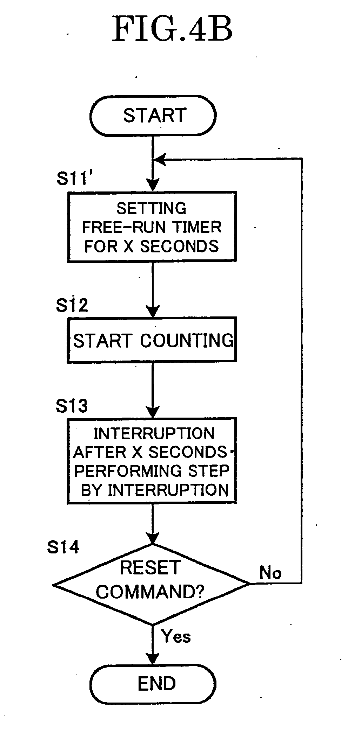

The processor 104, as described in FIG 2, has two types of timer functions. FIGS. 4A and 4B are flowcharts of actions of the two types of the timer functions. FIG 4A is a countdown timer and FIG 4B is a free-run timer. For the two types of the timers, when the timer reaches at zero from number of seconds which is set to the timer for a countdown, an interruption occurs. In addition, the number of seconds during the countdown is possible to be looked up in a register. Each timer is set X seconds to count (S11, S11'), starts a countdown (S12), and a predetermined interruption step is performed, after the X seconds which was set (S13).

The step by the countdown timer is over for one countdown. A restart is needed to operate again. On the other hand, the step by the free-run timer confirms a reset command (S14). When there is no reset command (No of the step S14), and a process is moved back to the step S11. When there is the reset command (Yes of the step S14), the step of the countdown is over. The free-run timer repeats interruptions at X-second intervals unless the reset command is performed.

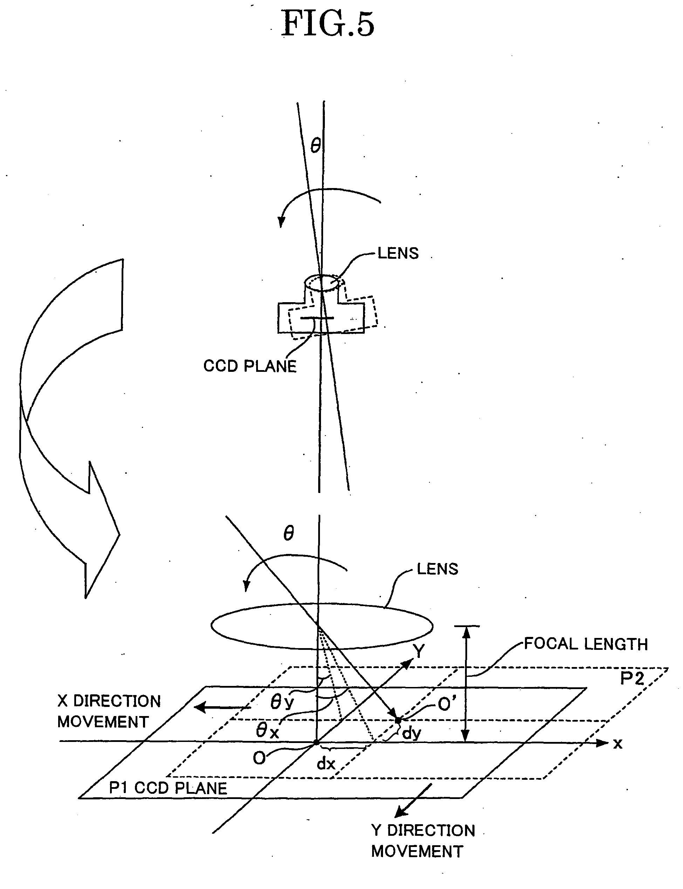

FIG 5 illustrates a principle of the image-blur suppression by sliding the CCD. The photographing plane (CCD plane) is at a position P1, and the subject image is projected at O. When the camera is rotated only θx, θy degrees by the camera shake, the photographing plane is moved to a position P2 and the subject image is projected at a position O'. The Photographing plane is moved in parallel only dx, dy to be at P1, so that a projection position of the subject in the photographing plane can turn back.

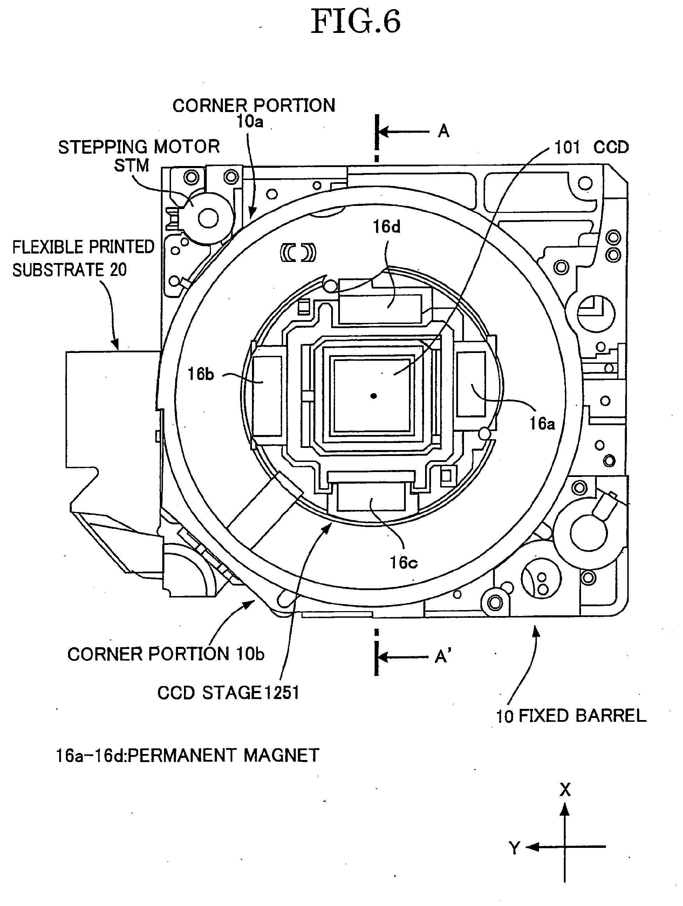

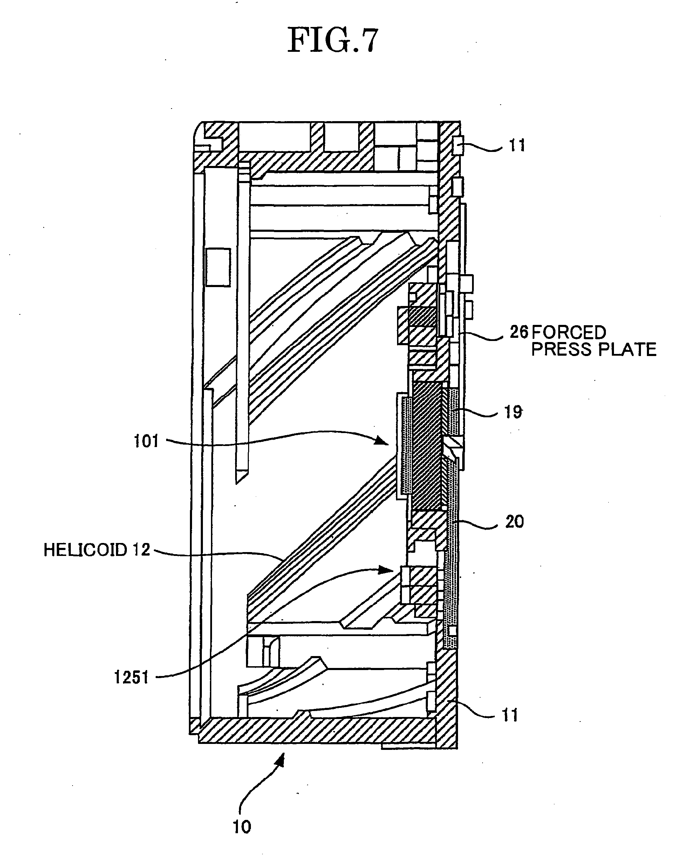

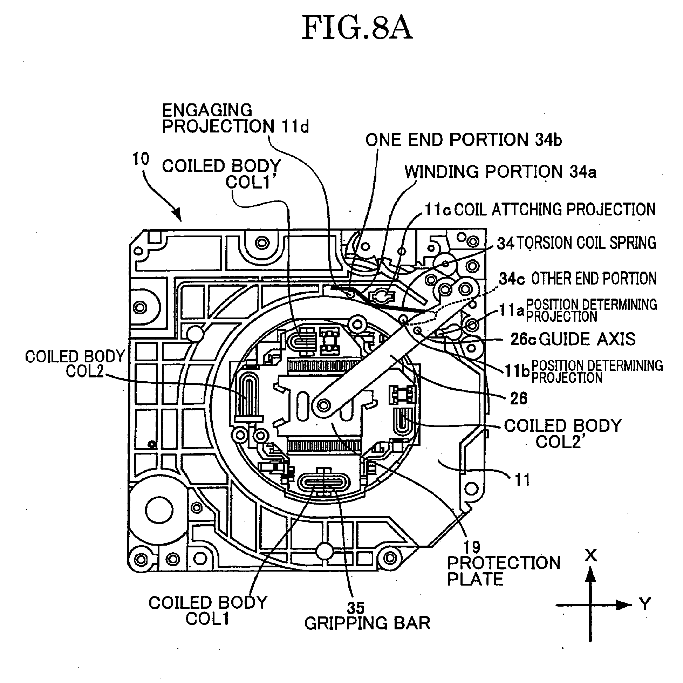

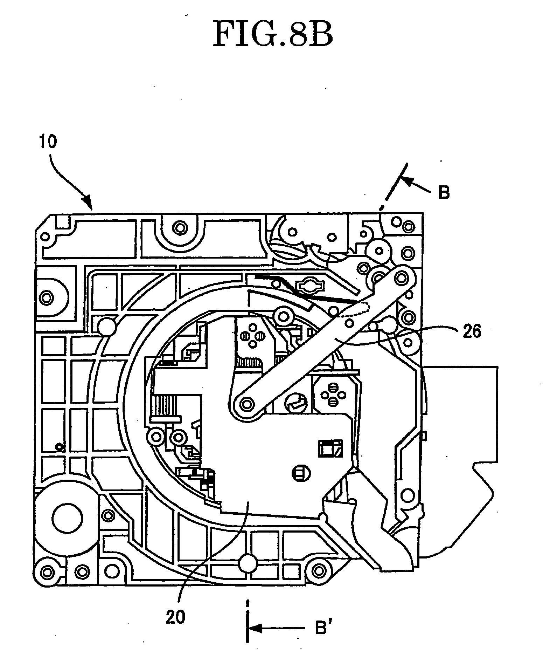

Next, referring to FIGS. 6 to 8B, the structure of the image-blur suppression mechanism will be explained. FIGS. 6 to 8B illustrate a fixed barrel which stores plural of lenses. FIG 6 is a front view thereof, FIG 7 is a vertical cross-sectional view of FIG 6 taken along the line A-A' and FIGS. 8A and 8B are back views thereof. In FIGS. 6 to 8B, a reference number 10 represents the fixed barrel being a boxy shape, an inner part of which is a storage space for holding the lens barrel therein. A back surface of the fixed barrel 10 is attached with a base member 11, which is a plate of an approximately rectangular shape entirely. A helicoid 12 is formed in an inner peripheral wall of the fixed barrel for extending or collapsing the lens barrel. The fixed barrel 10 has at least two corners, which are cutouts where one corner portion 10a is as an attaching portion for a stepping motor STM and the other corner portion 10b is as a folding space for a flexible printed substrate 20, which will be described later.

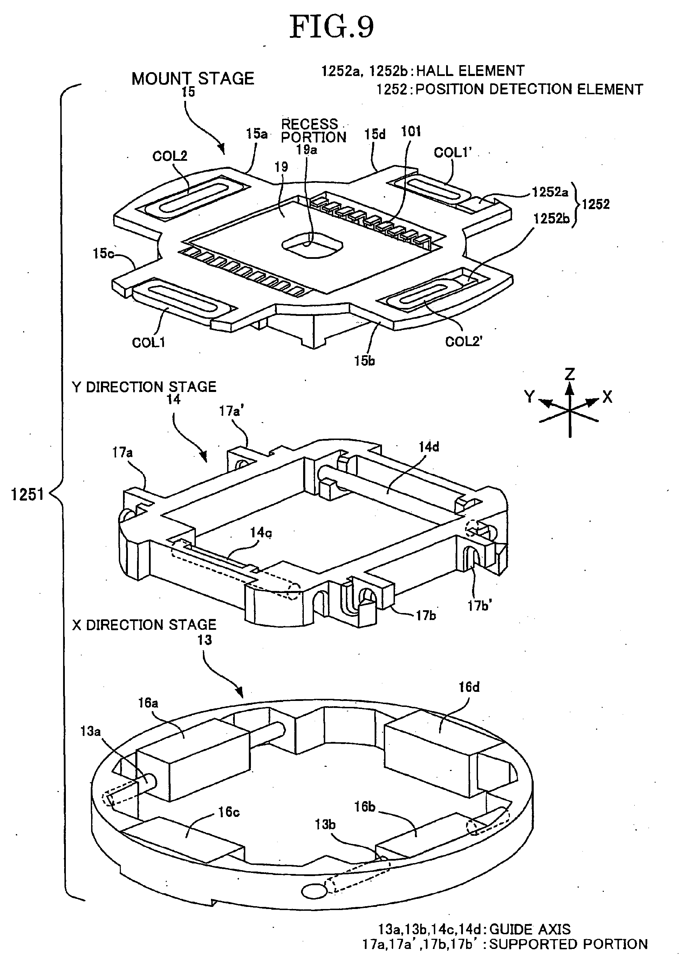

The CCD stage 1251, as illustrated in FIG 2, is provided for the base member 11. The CCD stage 1251 is structured substantially by an X direction stage 13 of an annular frame shape, a Y direction stage 14 of a rectangular shape and a mount stage 15, as illustrated in the exploded view of FIG 9.

The X direction stage 13 is fixed on the base member 11. In the X direction stage 13, a pair of guide shafts 13a and 13b extending to the X direction are spaced out in the Y direction. Four permanent magnets 16a to 16d of a rectangular parallelepiped shape are disposed in the X direction stage 13. The four permanent magnets 16a to 16d are in pairs, a pair of the permanent magnets 16a and 16b are spaced out in the Y direction in parallel in the X-Y plane. In the present embodiment, the pair of the guide shafts 13a and 13b are structured to pass through the pair of the permanent magnets 16a and 16b but not limited to this structure; it is also preferable to dispose the pair of the permanent magnets 16a and 16b side by side with the pair of the guide shafts 13a and 13b. A pair of permanent magnets 16c and 16d are spaced out in the X direction in the X-Y plane.

In the Y direction stage 14, a pair of guide shafts 14a and 14b extending to the Y direction, are spaced out in the X direction. In the Y direction stage 14, two pairs of the supported portion 17a and 17a', 17b and 17b', which spacing out oppositely in the X direction, are spaced out in the Y direction. Each pair of the supported portions (17a, 17a') and (17b, 17b') is supported movably by the pair of the guide shafts 13a and 13b in the X direction stage respectively, so that the Y direction stage is movable in the X direction.

The CCD 101 is fixed on the mount stage 15. The mount stage 15 includes a pair of coil attaching plates 15c and 15d extending out to the X direction and a pair of coil attaching plates 15a and 15b extending out to the Y direction. The CCD 101 is fixed in the center of the mount stage 15. In the mount stage 15, the supported portions in pairs (reference number is not described here.), which spacing out oppositely in the Y direction on the same side of the photographing plane of the CCD 101, are formed and spaced out in the X direction. Each pair of the supported portions is supported movably by the pair of the guide shafts 14c and 14d in the Y direction stage, respectively, so that the mount stage 15 entirely can be movable in the X-Y direction.

A protection plate 19 is attached on a surface opposing to the photographing plane of the CCD 101. A taper-shaped recess portion 19a is formed in the center of the protection plate 19. The functions of this recess portion 19a will be described later.

Coiled bodies COL 1 and COL 1' which are flat and convoluted are attached on a pair of coil attaching plates 15a and 15b, respectively. The coiled bodies COL 1 and COL 1' are series-connected. Coiled bodies COL 2 and COL 2' which are flat and convoluted, are also attached on a pair of coil attaching plates 15c and 15d, respectively. The coiled bodies COL 2 and COL 2' are series-connected as well.

The coiled bodies COL 1 and COL 1' are faced with the permanent magnets 16c and 16d, respectively. The coiled bodies COL 2 and COL 2' are faced with the permanent magnets 16a and 16b, respectively. The pair of coiled bodies COL 1 and COL 1' are used for moving the CCD 101 in the X direction, and the pair of COL 2 and COL 2' are used for moving the CCD 101 in the Y direction.

As illustrated in FIG 8A, gripping bars 35 made from magnetic materials, are provided with each coiled body COL 1 and COL 1' in the transverse direction to the X direction. The gripping bars 35 (bars made from iron) are attached and the magnets (attached to stages) and the bars (attached to stages) are attracted to each other, so that backlashes are prevented.

A Hall element is used as a position detection element 1252. A Hall element 1252a as the position detection element 1252 is provided with the coil attaching plate 15d, one of the coil attaching plates 15c and 15d. A Hall element 1252b is provided with the coil attaching plate 15b, one of the coil attaching plates 15a and 15b as well.

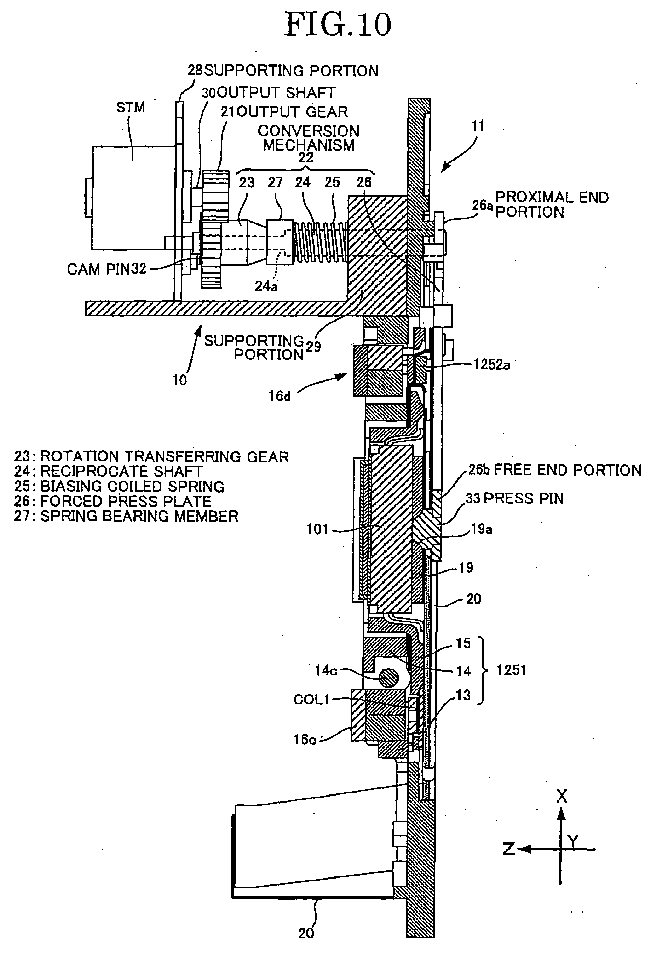

The CCD 101 is electrically connected to the F/E IC 102 via the flexible printed substrate 20 (See FIG. 10). The Hall elements 1252a and 1252b are electrically connected to an operation amplifier via the flexible printed substrate 20, and each of the coiled bodies COL1, COL1', COL 2 and COL2' is electrically connected to the driver 1254 (See FIG2).

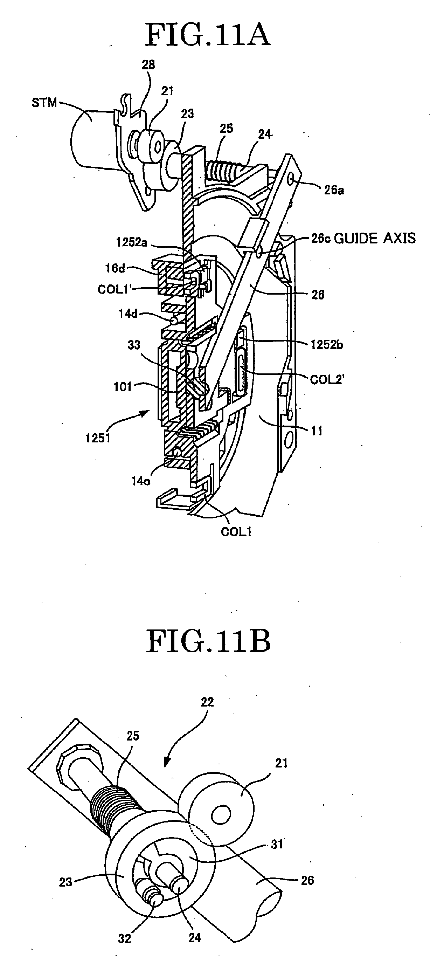

The retention mechanism 1263 at the original point position as illustrated in FIG. 2 includes the stepping motor STM as illustrated in FIG 10 which illustrates a vertical cross-sectional view taken along the line of B-B' of FIG. 8B and as enlarged views in FIGS. 11A and 11B. The mechanical structure of the retention mechanism 1263 will be described in detail at first, and the drive control of the stepping motor STM will be described later.

As illustrated in FIG. 6, the stepping motor STM is provided in the corner portion 10a of the fixed barrel 10. An output gear 21 is provided with an output shaft 30 of the stepping motor STM. In the corner portion 10a of the fixed barrel, a conversion mechanism 22 which converts a rotational movement to a linear movement, is provided.

The conversion mechanism 22 approximately includes a rotation transferring gear 23, a reciprocating shaft 24, a biasing coiled spring 25, a forced press plate 26 and a spring bearing member 27. A pair of supporting portions 28 and 29 are formed and spaced out in the Z direction at the corner portion 10a of the fixed barrel 10. The supporting portion 28 is structured as a motor mounting plate. The reciprocating shaft 24 is supported by crossing the supporting portion 29 and the motor mounting plate 28. The rotation transferring gear 23, is disposed between the pair of supporting portions 28 and 29, is supported to enable to rotate, and is meshed with the output gear 21.

One end side of the reciprocating shaft 24 penetrates the supporting portion 29 and faces a back face side of the base member 11. The biasing coiled spring 25 is provided between the spring bearing member 27 and the supporting portion 29. The reciprocating shaft 24 is biased toward the supporting portion 28 by the biasing coiled spring 25. The reciprocating shaft 24 includes a stair-shaped portion 24a engaging with a shaft hole at an end face of the rotation transferring gear 23.

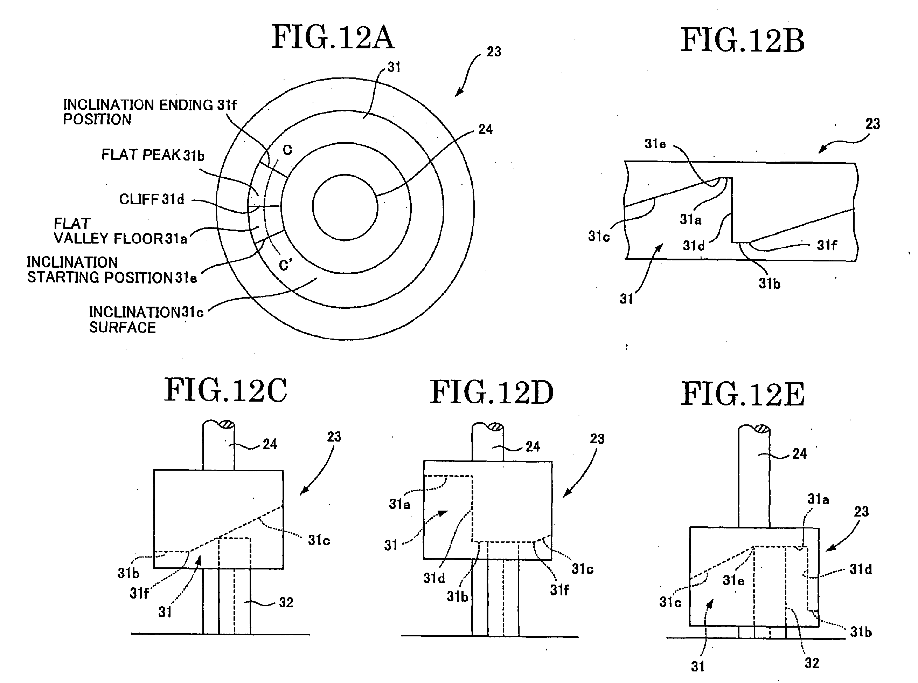

As illustrated in FIGS. 12A to 12E, there is formed a cam groove 31 at one end face portion of the rotation transferring gear 23. The cam groove 31 extends to a circumferential direction of the rotation transferring gear 23. The cam groove 31 includes a flat valley floor 31 a, a flat peak 31 b and an inclination surface 31 c inclining continuously from the flat valley floor 31 a to the flat peak 31 b. Between the flat valley floor 31 a and the flat peak 31 b, there is a cliff 31d as an attaching wall that a cam pin, described later, is attached from the rotating direction.

The cam pin 32 is fixed in the supporting portion 28 (See FIG 10), a tip of the cam pin 32 is in sliding contact with the cam groove 31. The length of the flat valley floor 31a in the rotating direction from the cliff 31 d to the inclination starting position 31e of the inclination surface 31c is equivalent to 2 pulses of a rotation control signal of the stepping motor STM.

The length of the inclination surface 31c in the rotating direction from the inclination starting position 31e of the inclination surface 31 c through the flat peak 31b to an inclination ending position 31f is equivalent to 30 pulses of the rotation control signal of the stepping motor STM.

The length of the flat peak 31b in the rotating direction from the inclination ending position 31f to the cliff 31d is equivalent to 3 pulses of the rotation control signal of the stepping motor STM. The 35 pulses of the rotation control signal of the stepping motor STM corresponds to one rotation of the rotation transferring gear 23, which makes the reciprocating shaft 24 complete one reciprocation in the Z direction.

A forced press plate 26 is provided on the back face side of the base member 11. As illustrated in FIGS. 10 and 11 a, the forced press plate 26 is structured for extending to the center of the CCD 101. A proximal end portion 26a of the forced press plate 26 is fixed at one end face portion of the reciprocate shaft 24. A tapered-shape press pin 33 is fixed at a free end portion 26b of the forced press plate 26. A guide axis 26c is projected formed on the way of the extending direction of the forced press plate 26.

As illustrated in FIGS. 8A and 8B, position determining projections 11a and 11b, a coil attaching projection 11c and an engaging projection 11d are formed on the base member 11. A winding portion 34a of a torsion coil spring 34 is attached to the coil attaching projection 11c. One end portion 34b of the torsion coil spring 34 is engaged with the engaging projection 11d and the other end portion 34c of the torsion coil spring 34 is engaged with the guide axis 26c. A guide hole (not shown) to guide the guide axis 26c is formed on the base member 11.

While the forced press plate 26 is abutted on the position determining projection 11a by the torsion coil spring 34, the forced press plate 26 is reciprocated in an estranged and approaching direction to the base member 11 along with reciprocation of the reciprocating shaft 24. The guide axis 26c performs a role of making reciprocation of the forced press plate 26 in a stable manner.

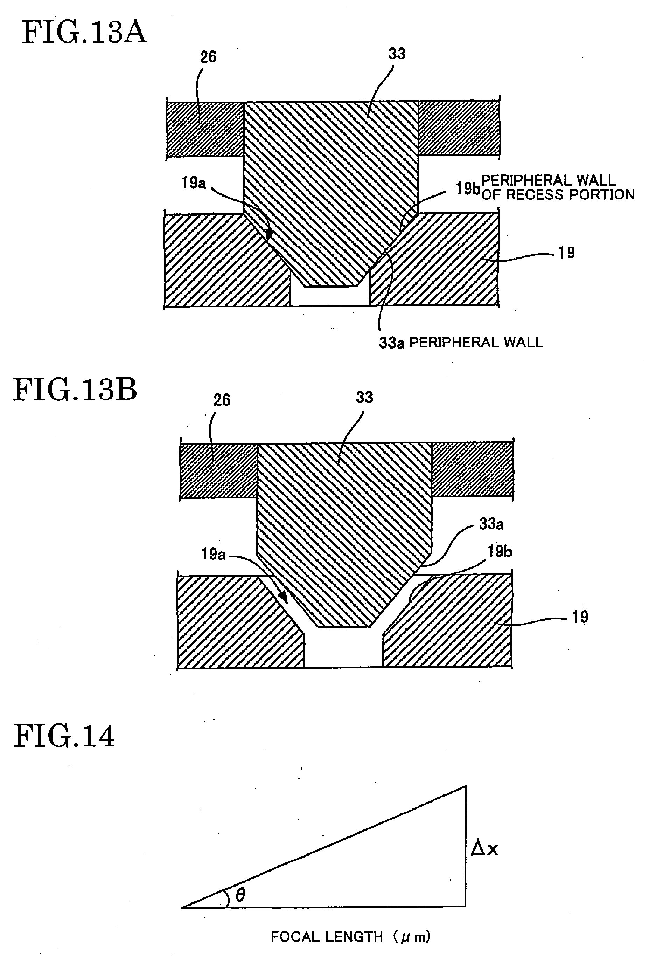

The press pin (fitting projection) 33 fulfills its function to retain mechanically the mount stage 15 (See FIG. 9) at the original point position by fitting itself to the recess portion (fitting hole) 19a. As illustrated in an enlarged view in FIG 13B, a state in which a peripheral wall 33a of the press pin 33 is closely fitted to a peripheral wall of the recess portion 19b of the protection plate 19 is equivalent to a hold standby position (See FIG 12D) of the cam pin 32. As illustrated in an enlarged view in FIG. 13A, a state in which a peripheral wall 33a of the press pin 33 is away at a maximum from a peripheral wall of the recess portion 19b of the protection plate 19 corresponds to a release standby position (See FIG 12E) of the cam pin 32. The hold standby position of the cam pin 32 is also a forced original point position of the mount stage 15.

Next, a moving target point of the CCD 101 is determined by a basis of an input from a gyro sensor 1241. The gyro sensor 1241 is arranged to capture a Pitch directional rotation and a Yaw directional rotation of the camera. An A/D converter 10411 loads an output from the gyro sensor 1241 at T [s] (Hereinafter, [s] is referred to as seconds.) intervals and performs AD (analog-digital) conversion.

Here, when ω yaw (t) is an instant angular velocity in Yaw direction, ω pitch (t) is an instant angular velocity in Pitch direction, θ yaw (t) is an angular variation in Yaw direction, θ pitch (t) is an angular variation in Pitch direction, D yaw (t) is a movement amount of a moving image corresponding to a rotation in Yaw direction, and D pitch (t) is a movement amount of a moving image corresponding to a rotation in Pitch direction, the angular variation in Yaw direction (formula 1) is obtained from a following expression:

$$\theta \text{ yaw (t)} = \sum \omega \text{ yaw (i)} \times T \quad \text{(i is from 0 to t.)} \quad \text{(formula 1)},$$

and the angular variation in Pitch direction (formula 2) is obtained from a following expression:

$$\theta \text{ pitch (t)} = \sum \omega \text{ pitch (i)} \times T \quad \text{(i is from 0 to t.)} \quad \text{(formula 2)}.$$

On the other hand, a focal length f is determined by a zoom point zp and a focus point fp. The movement amount of the moving image corresponding to the rotation in Yaw direction (formula 3) is obtained from a following expression:

$$D \text{ yaw (t)} = f \times \tan (\theta \text{ yaw (t)}) \quad \text{(formula 3)},$$

And the movement amount of the moving image corresponding to the rotation in Pitch direction (formula 4) is obtained from a following expression:

$$D \text{ pitch } (t) = f \times \tan (\theta \text{ pitch } (t)) \qquad (\text{formula } 4).$$

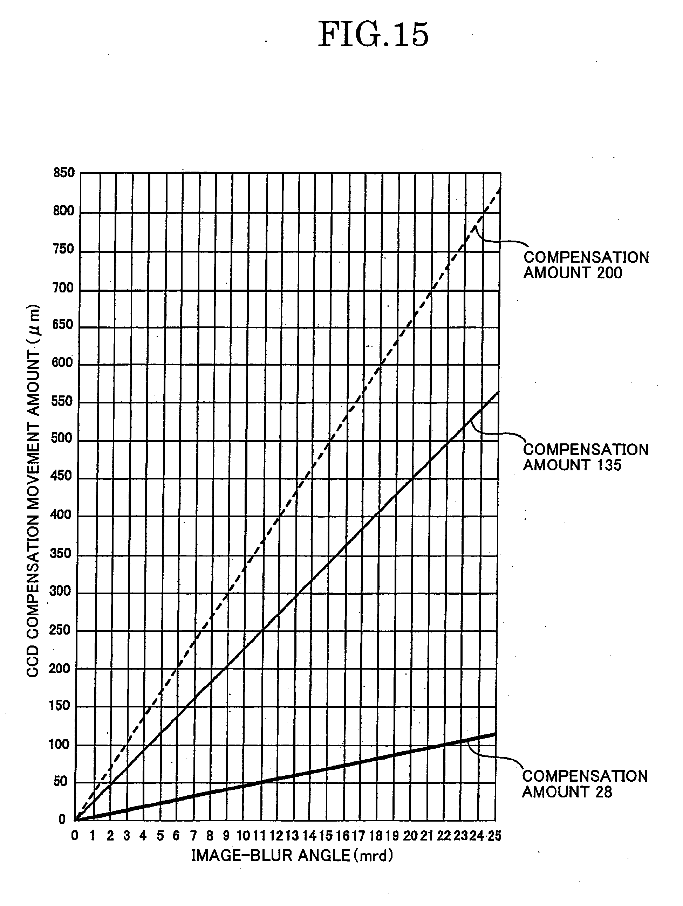

In other words, these are the amounts to be moved of the CCD 101. FIG. 14 illustrates the movement amount of the CCD by the focal length. FIG 15 and a (table 1) describe a relationship between an image-blur angle and a CCD compensation movement amount.

TABLE.1

| The conversion of CCD movement amount of image-blur angle | | | |
|---|---|---|---|
| 35mm focal length | 28 | 135 | 200 |
| Actual focal length | 4.7 | 22.6 | 33.5 |
| | | | |
| image-blur angle and image movement | compensation amount (one side) | | |
| Image-blur angle (mrad) | 28 | 135 | 200 |
| 0 | 0 | 0 | 0 |
| 0. 5 | 2 | 11 | 17 |
| 1 | 5 | 23 | 34 |
| 1.5 | 7 | 34 | 50 |
| 2 | 9 | 45 | 67 |
| 2. 5 | 12 | 57 | 84 |
| 3 | 14 | 68 | 101 |
| 3.5 | 16 | 79 | 117 |
| 4 | 19 | 91 | 134 |
| 4. 5 | 21 | 102 | 151 |
| 5 | 23 | 113 | 168 |
| 5. 5 | 26 | 125 | 184 |
| 6 | 28 | 136 | 201 |
| 6.5 | 31 | 147 | 218 |
| 7 | 33 | 158 | 235 |
| 7.5 | 35 | 170 | 252 |
| 8 | 38 | 181 | 268 |
| 8.5 | 40 | 192 | 285 |
| 9 | 42 | 204 | 302 |
| 9. 5 | 45 | 215 | 319 |
| 10 | 47 | 226 | 335 |
| 10.5 | 49 | 238 | 352 |
| 11 | 52 | 249 | 369 |
| 11.5 | 54 | 260 | 386 |
| 12 | 56 | 272 | 403 |

(continued)

| The conversion of CCD movement amount of image-blur angle | | | |
|---|---|---|---|
| 12.5 | 59 | 283 | 419 |
| 13 | 61 | 294 | 436 |
| 13.5 | 63 | 306 | 453 |
| 14 | 66 | 317 | 470 |
| 14.5 | 68 | 328 | 486 |
| 15 | 70 | 340 | 503 |
| 15.5 | 73 | 351 | 520 |
| 16 | 75 | 362 | 537 |
| 16.5 | 77 | 374 | 554 |
| 17 | 80 | 385 | 570 |
| 17.5 | 82 | 396 | 587 |
| 18 | 85 | 408 | 604 |
| 18. 5 | 87 | 419 | 621 |
| 19 | 89 | 430 | 637 |
| 19.5 | 92 | 442 | 654 |
| 20 | 94 | 453 | 671 |
| 20.5 | 96 | 464 | 688 |
| 21 | 99 | 476 | 704 |
| 21.5 | 101 | 487 | 721 |
| 22 | 103 | 498 | 738 |
| 22.5 | 106 | 510 | 755 |
| 23 | 108 | 521 | 772 |
| 23.5 | 110 | 532 | 788 |
| 24 | 113 | 543 | 805 |
| 24.5 | 115 | 555 | 822 |
| 25 | 117 | 566 | 839 |

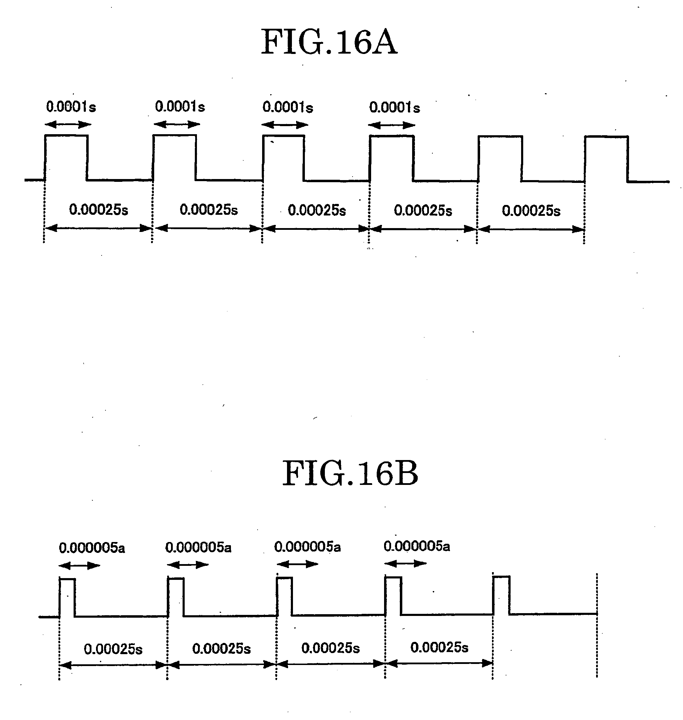

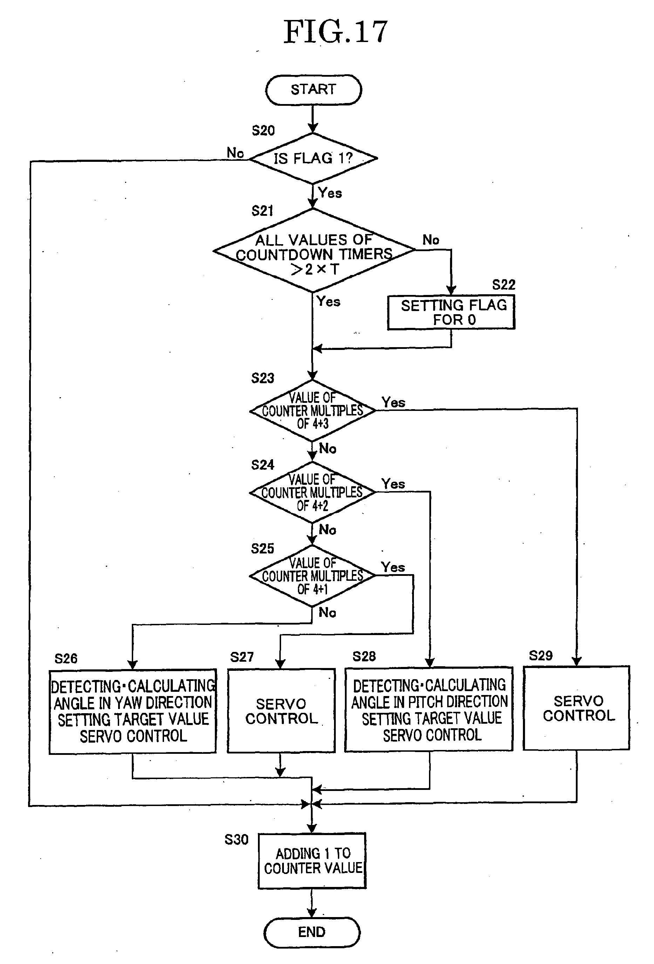

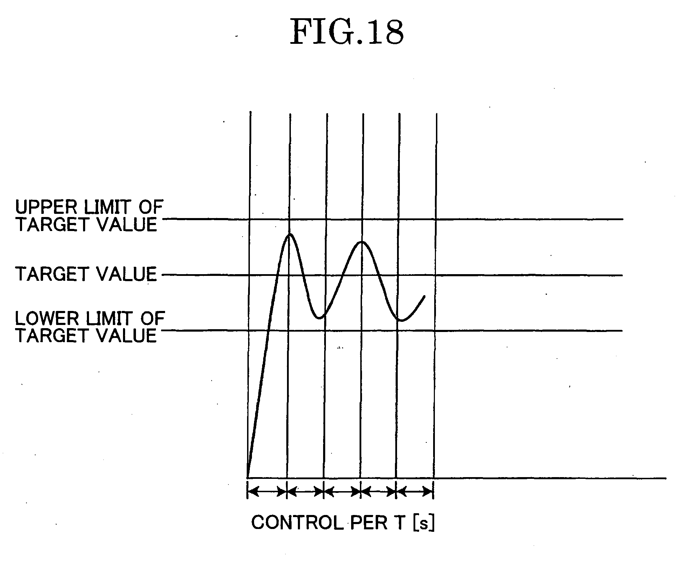

FIGS. 16A and 16B are timing charts which represent control cycles of a servo control to move the CCD. In an embodiment of the invention, a flowchart as illustrated in FIG 17 is performed per a cycle T = 0.00025 [s]. As a result, the CCD moves for a target position as illustrated in FIG 18

In FIG 17, at first, it is determined if a flag is "1" or not (S20). When the flag is "1" (Yes of the step S20), a process is moved to a next step S21. When the flag is not "1" (No of the step S20), a process is moved to the step S30. When the flag which performs an image-blur suppression step is "1" and the flag which does not perform the image-blur suppression step is "0", amounts of time required to perform the flowchart of FIG 17 are 0.0001 [s] (FIG. 16A) and 0.000005 [s] (FIG. 16B), respectively.

In the step S20, when the flag is determined to be "1", it is determined if the countdown timer is zero and a value of time until the interruption divided by the cycle T is over twice the cycle T or not, in other words, if "All the values of the countdown timers > 2 × T " or not (S21). When the step S21 is determined to be "Yes", a process is moved to the step S23. When it is "No", the flag is set to "0" (S22) and then a process is moved to the step S23.

Next, if a value of the counter is determined to be multiples of 4 + 3 or not (S23). When it is "Yes", the servo control is performed and move the CCD (S29) and then a process is moved to the step S30. When the step 23 is determined to be "No", a process is moved to the step S24.

In addition, if the value of the counter is determined to be multiples of 4 + 2 or not (S24). When it is "Yes", a detection of the angular velocity in Pitch direction and a calculation of the angle are performed and a target value is set, the servo control is performed and moves the CCD (S28), and a process is moved to the step S30. When the step S24 is determined to be "No", a process is moved to the step S25.

Furthermore, if the value of the counter is determined to be multiples of 4 + 1 or not (S25). When it is "Yes", the servo control is performed and moves the CCD (S27), and then going on to the step S30. When the step S25 is determined to be "No", a detection of the angular velocity in Yaw direction and a calculation of the angle are performed and a target value is set, the servo control is performed and moves the CCD (S26), and process is moved to the step S30.

Finally, in the step S30, after the step of adding "1" to the value of the counter, whole steps are over.

In the servo control, when the shorter the cycle T [s] is, the better a control value is possible to be converged around the target value. However, for example, when a compensation step time is T = 0.0001 [s], an interval of the image-blur compensation is the shortest. In this case, the CPU is used for other steps except the image-blur compensation , so that an occupancy rate of the CPU for the image-blur compensation is not possible to be 100%. On the other hand, when the occupancy rate is too high, interruption steps except the image-blur compensation disturb. As a result, the interruption of the image-blur compensation is missed, the interruption step of image-blur compensation slips off and the other mounted functions except the image-blur suppression are affected. To avoid these problems, in an embodiment of the invention, the CPU occupancy rate is set to 40%, a cycle T = 0.00025 [s]. The cycle T = 0.00025 [s] is also applicable to a centering to stay the CCD in the center by the servo control and the image-blur compensation when exposing.

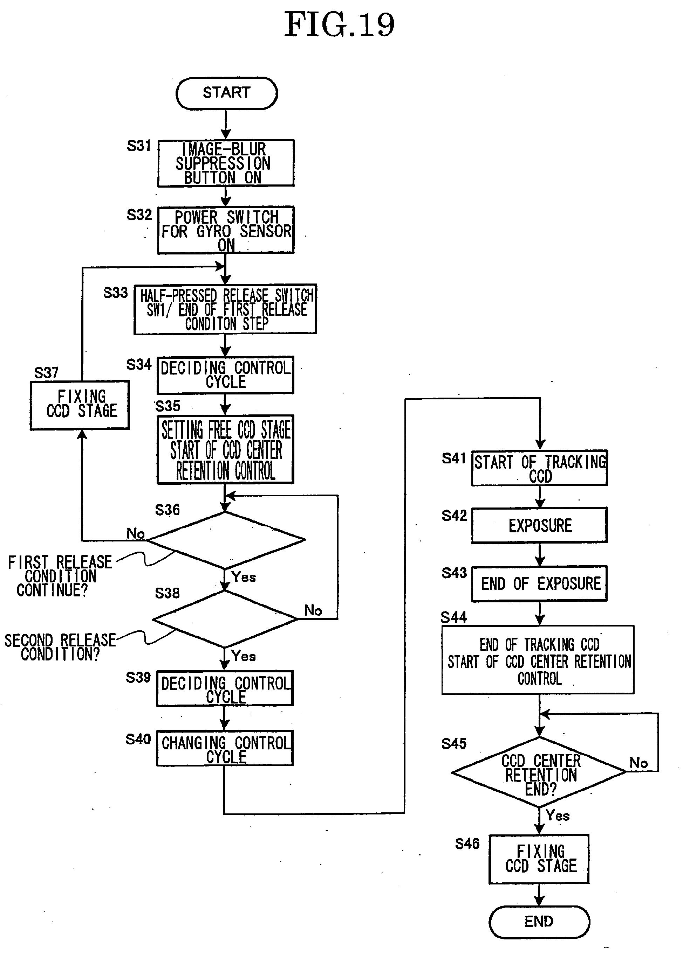

FIG. 19 is a flowchart which illustrates a step when photographing a still image. A release switch SW1 as illustrated in FIG 1A is pressed, for example, after detecting a half-pressed condition, i.e. a first release condition, the retention mechanism which fixes the CCD is released, and at the same time, the centering to retain and control the CCD in the center is performed. Additionally, after detecting a further-pressed condition from the first condition, i.e. a second release condition, a tracking the CCD begins, and an exposure is performed. When the exposure is over and the tracking the CCD is over as well. And the centering begins again. When the centering is completed, a fixation of the CCD stage is performed. The operations of the first and the second release conditions are controlled by a CPU block 1043 via a sub CPU 109.

In FIG 19, at first, when an image-blur suppression switch SW14 is on (S31), a power switch of the gyro sensor is on (S32). And when the release switch is half-pressed and the step of the first release condition is over (S33), a control cycle is determined (S34), the CCD stage 1251 is set free and a center retention control (the centering) of the CCD 101 is begun (S35).

Next, if the first release condition is determined to be continuing or not (S36). When it is not continuing (No of the step S36), the CCD stage 1251 is fixed (S37) and a process is moved back to the step S33. In the step S36, when the first release condition is continuing (Yes of the step S36), the release switch SW1 is pressed further and it is determined to be the second release condition or not (S38). When it is not pressed further (No of the step S38), a process is moved back to the step S36.

In the step S38, at the second release condition (Yes of the step S38), the control cycle is determined again (S39). After changing to the determined control cycle (S40), the tracking the CCD is begun (S41). At this time, the exposure is performed (S42). When the exposure is over (S43), the tracking the CCD is over and the center retention control of the CCD is begun again (S44).

Finally, if the center retention control of the CCD is determined to be finished or not (S45). When it is finished (Yes of the step S45), the CCD stage is fixed (S46) and whole steps are over.

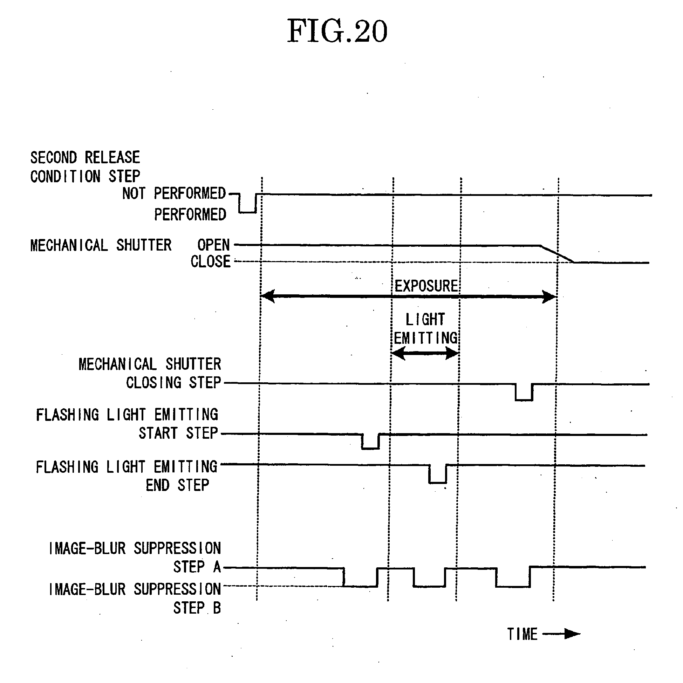

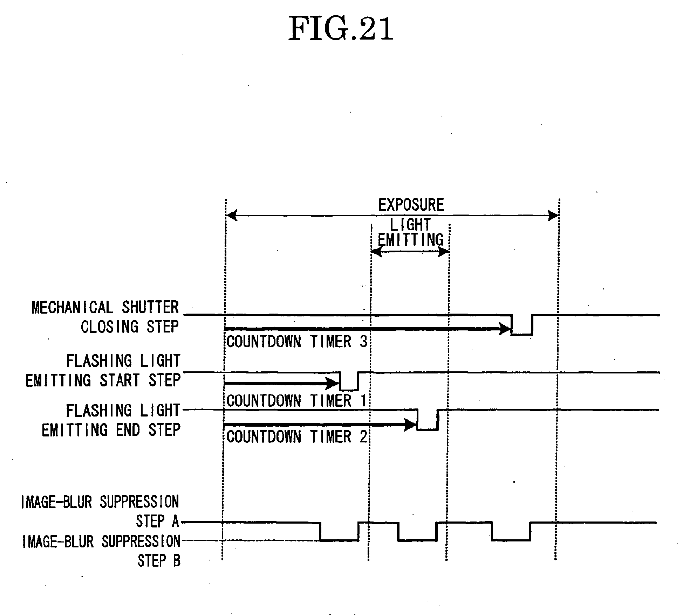

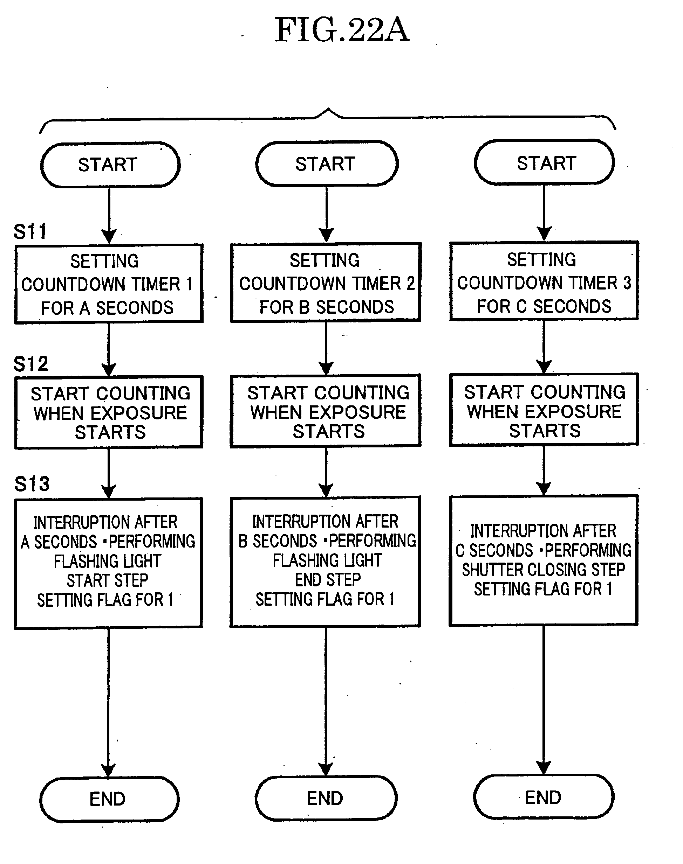

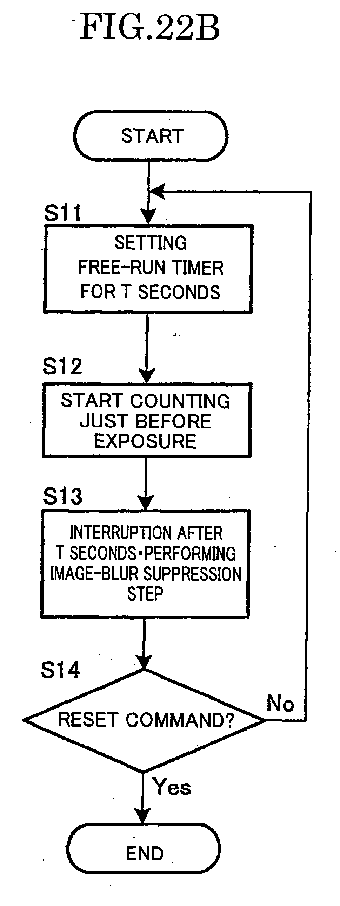

FIGS. 20 and 21 illustrate timing charts, especially in an operation during the exposure. FIG 21 illustrates a chief part of FIG 20 in detail. In addition, FIGS. 22A and 22B are, as well as in FIGS. 4A and 4B, flowcharts which illustrate an usage of two types of timers. FIG 22A is the flowchart of a countdown timer and FIG 22B is the flowchart of a free-run timer.

An image-blur suppression step A in FIGS. 20 and 21 describes a step in which the step S20 in FIG 17 "Is the flag 1?" is determined to be "Yes". This step is a step of a tracking to the target point repeatedly by the recalculation of the angle/the resetting of the target point/the servo control. Thus, repeating these steps makes the CPU occupancy period longer.

On the other hand, the image-blur suppression step B describes a step in which the step S20 in FIG 17 "Is the flag 1?" is determined to be "No". This step is not a step of the tracking to the target point repeatedly by the recalculation of the angle/the resetting of the target point/the servo control. The CPU occupancy period of this step is extremely shorter comparing to the image-blur suppression step A, because the tracking is not performed.

In an embodiment of the invention, in the case of beginning a step regarding the exposure (a shutter closing step, a flashing light emitting start step, or a flashing light emitting end step), when beginning time is within the predetermined time, the image-blur compensation step (from the image-blur suppression step A to the image-blur suppression step B) is stopped. That is, the shutter closing step, the flashing light emitting start step, or the flashing light emitting end step has a priority to be performed over the image-blur compensation step.

Now, in FIGS. 20 and 21 from the left in order of time before the exposure, for example, by use of a brightness level of a monitoring image, an exposure time C is determined to be 0.5 seconds, a flashing light emitting start time B is determined to be 0.067 seconds and a flashing light emitting end time A is determined to be 0.068 seconds. Horizontal axes in FIGS. 20 and 21 describe time. A free-run timer of FIG. 22B starts before the exposure. A default value of the flag is "1". The steps of the flowchart in FIG 17 continue to be performed repeatedly at the T [s] cycle.

At the same time with beginning of the exposure, countdown timers 1, 2 and 3 in FIG 22A start counting (See FIG 21).

Just before performing the flashing light emitting step, in a determination of the step 21 "All the values of the countdown timers > 2 × T" in FIG. 17, "Yes" turns to be "No" and the flag becomes "0". From a next interruption, a determination of the step 20 "Is the flag 1?" is "No", so that the steps of the flowchart in FIG. 17 end without performing approximately any of the steps at all.

A seconds after the countdown timer 1 set becomes "0", the flashing light emitting start step interrupts. If a timing of the flashing light emitting start step and a timing of the image-blur compensation step are the same timing coincidentally, a gap of the flashing light emitting timing is possible to be ignored because the image-blur compensation step is 0.000005 [s] this time.

At the end of the flashing light emitting start step, the flag is set to be "1 ". Again at an interruption of the image-blur compensation after this, in the step S21 "values of all the countdown timers > 2 × T " in FIG 17, a determination is "Yes", so that the image-blur suppression step continues to be performed.

Just before the flashing light emitting end step, in a determination of the step S21 "values of all the countdown timers > 2 × T " in FIG 17, "Yes" turns to be "No" and the flag becomes "0". From a next interruption, a determination of the step 20 "Is the flag 1?" is "No", so that the steps of the flowchart in FIG 17 end without performing approximately any of the steps at all.

B seconds after the countdown timer 2 set becomes "0", the flashing light emitting end step interrupts. If a timing of the flashing light emitting end step and a timing of the image-blur compensation step are the same timing coincidentally, it is possible to be said that there is no gap of the flashing light emitting end timing because the image-blur compensation step does not perform approximately anything.

. At the end of the flashing light emitting end step, the flag is set to be "1". Again at an interruption of the image-blur compensation after this, in the step S21 "values of all the countdown timers > 2 × T " in FIG 17, a determination is "Yes", so that the image-blur suppression step continues to be performed.

Just before a mechanical shutter closing step, in a determination of the step S21 "values of all the countdown timers > 2 × T " in FIG 17, "Yes" turns to be "No" and the flag becomes "0". From a next interruption, a determination of the step 20 "Is the flag 1?" is "No", so that the steps of the flowchart in FIG 17 goes through without performing approximately any of the steps at all.

C seconds after the countdown timer 3 set becomes "0", the mechanical shutter closing step interrupts. If a timing of the mechanical shutter closing step and a timing of the image-blur compensation step are the same timing coincidentally, it is possible to be said that there is no gap of the mechanical shutter closing timing because the image-blur compensation step does not perform approximately anything.

At the end of the mechanical shutter closing operation, the flag is set to be "1 ". Again at an interruption of the image-blur compensation after this, in the step S21 "values of all the countdown timers > 2 × T " in FIG 17, a determination is "Yes", so that the image-blur suppression step continues to be performed.

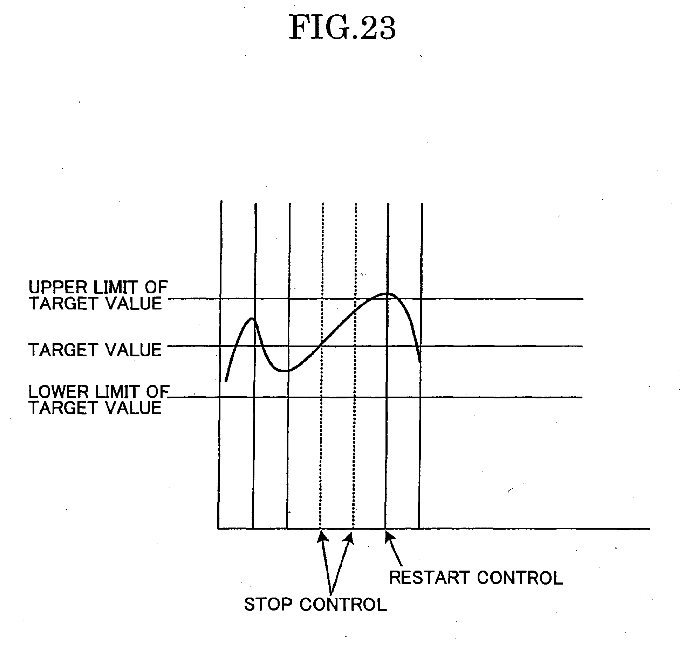

As described above, since a compensation control is not performed in the image-blur suppression step B, an electric current which flows to a coiled body stays at the latest electric current value setting until going back to the image-blur suppression step A, the CCD continues proceeding in the direction of travel at this latest electric current value setting, and being exposed away from the target point (See FIG 23).

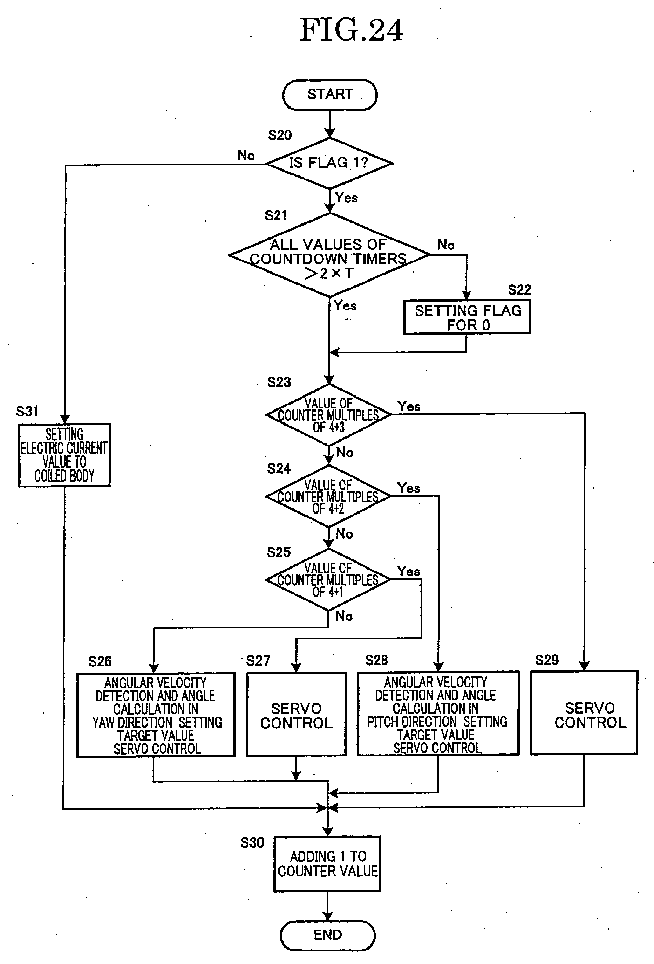

Consequently, steps of a flowchart as illustrated in FIG 24 are performed. The steps are almost same as the steps in FIG 17 as described above. A difference between the steps in FIG 24 and in FIG 17 is that an electric current value to the coiled body is set (S31) when a determination of the step S20, "Is the flag 1? " is "No" (the image-blur suppression step B).

By the electric current value setting in this step S31, the latest electric current value setting flowing to the coiled body is possible to be changed when the image-blur suppression step B, so that the CCD is possible to continue proceeding to the direction of travel at this same electric current value setting, to prevent from being exposed away from the target point and to be within the range of target values.

In the servo control of FIG. 17, referring to the flag, a servo control of 0.00025 [s] cycle is performed when it is "1" and a servo control of 0.00075 [s] is performed when it is "0". When the image-blur compensation step interrupts during these servo controls, the flashing light emitting or the mechanical shutter closing is impossible to interrupt. If they are impossible to be carried out when they are required, an light emitting time or an exposure time is different, as a result, for example, too bright images are photographed. In order to avoid this situation, just before the flashing light emitting or the mechanical shutter closing is performed, the servo control of the image-blur compensation is stopped temporarily to perform the flashing light emitting step or the mechanical shutter closing step at a desired timing. As a result, it is possible to photograph images without any influences.

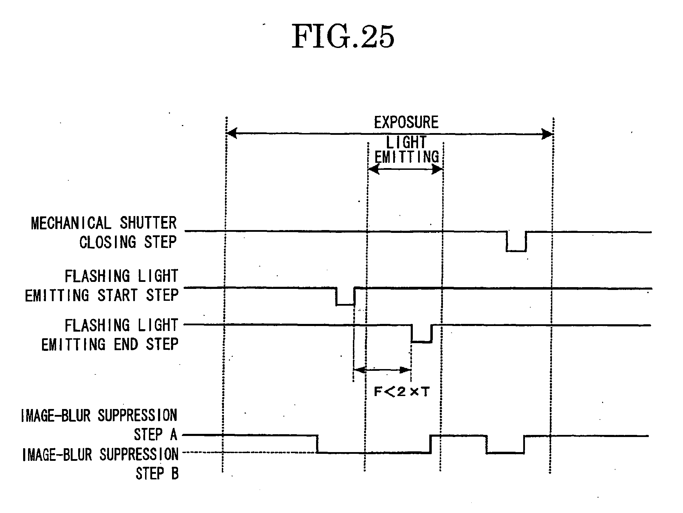

When a period F between the ending of the flashing light emitting start step and the beginning of the flashing light emitting end step is shorter than 2 × T, the flashing light emitting end step might be the same timing as the image-blur compensation step (0.0001 [s]). In that case, an exposure timing chart is as FIG 25, instead of FIG 21.

As illustrated in FIG 25, the flag is not returned to "1" at the end of the flashing light emitting start step and the flag is returned to "1" at the end of the flashing light emitting end step. As a result, whenever the flashing light is emitting, a determination of the step S20 as illustrated in FIG. 17 "Is the flag 1?" is "No" and a compensation processing time is 0.000005 [s].

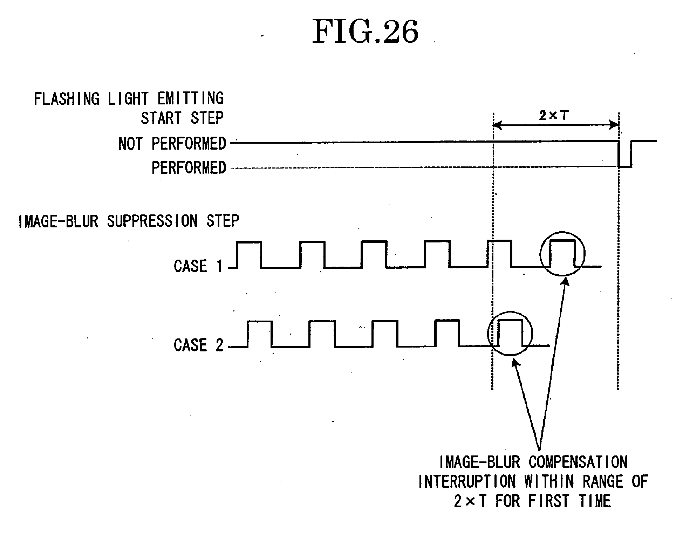

FIG. 26 illustrates a reason that the determination of the step S21 in FIG 17 "values of all the countdown timers > 2 × T " is on the basis of "2 × T". As illustrated in FIG 26, it is a case 1 when "values of all the countdown timers > 2 × T " is "No" at the slowest and it is a case 2 when "values of all the countdown timers > 2 × T " is "No" at the quickest. In either of the cases, in the flowchart as illustrated in FIG. 17, a processing time is 0.000005 [s] to perform the flashing light emitting start step. Multiplier "2" of the cycle T is the minimum multiplier, so that the flowchart as illustrated in FIG. 17 is possible to be 0.000005 [s] to perform the flashing light emitting start step.

"All the countdown timers" determined by the step S21 means that at least one of the countdown timers is working, however there are three countdown timers in the example as described above.

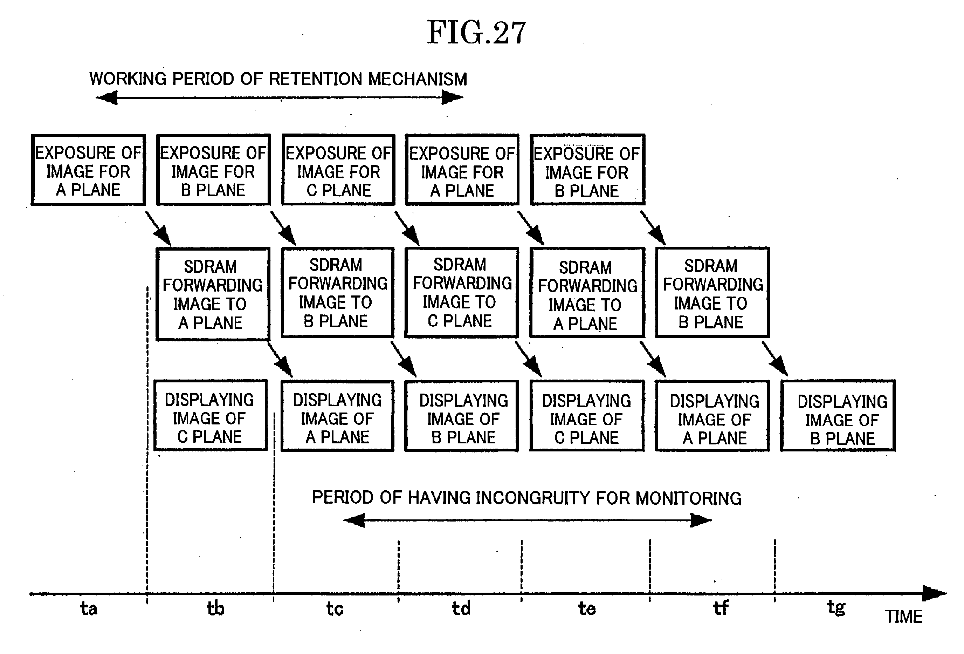

FIG 27 illustrates a flow of the monitoring image in an embodiment of the invention. For example, an image loaded place from the CCD 101 as illustrated in FIG 2 has three planes, A, B and C on the SDRAM 103 and images are loaded by repeating a flow of A-B-Cs. The latest image which just finished loading, is used as a displayed image. For example, when an image is forwarded to the B planes, an image of the A plane is used as the displayed image. (At the same time, the CCD exposes for the C plane.) A next exposure begins when this forwarding starts, in addition, the displayed image is switched. Thus, the displayed image and a real time scene have a time-lag.

When a next image has been displayed from the point of starting a release of a mechanical retention of the image-blur compensator, an image is possible to be stopped equally. For example, in this method, the displayed image is not switched and an A plane remains being displayed if it is the A plane. This method also prohibits forwarding the exposed images from the CCD 101 to the SDRAM 103.

In particular, when the release is started at a time ta in FIG 27, an image of C plane at a time tb remains being displayed and a forwarding of an exposed image of the B plane and a forwarding of an image of the A plane from the SDRAM 103 to a display apparatus are prohibited.

Afterward, at a following time te counting from the point of ending the release of the mechanical retention (a time td), the exposed image of the B plane is allowed to forward to the SDRAM 103. At a time tg, updating of monitoring is allowed to display the image of the B plane forwarded to the SDRAM 103 at a time tf, on the display apparatus.

Therefore, it is possible to make a transition from the mechanical retention to the electric retention without occurring an incongruity such as the image shift and so on when releasing the mechanical retention.

The method of a gravity direction determination according to an embodiment of the invention will be explained. During the time starting releasing the retention mechanism 1263 to the time starting a centering of the CCD 101 in the first or the second condition of the release switch being pressed, an output value of the gyro sensor 1241 is obtained at 10 ms intervals. When all the output values obtained are not in the predetermined range, it is determined to be a failure of the determination and the step of the gravity direction determination is cancelled.

Now, the AD conversion is carried out 10 times at 10 ms intervals when after starting releasing the retention mechanism and before starting the centering. An average AD value in this case, is calculated. For example, the average AD value in an x and y direction is (x, y) = (xa, ya). After 30 ms from after starting the centering, the AD conversion is carried out 10 times at 1 ms intervals. The average AD value in this case is (x, y) = (xb, yb).

When the output value of the gyro sensor 1241 as described above is not determined to be the failure of the determination, an expression (formula 5) as described below is calculated.

$$R = 100 \times (|yb\text{-}ya|) / (|xb\text{-}xa|) \quad \text{(formula 5)}$$

When a result is R > 200, the gravity direction is determined to be a holding the camera horizontally. When a result is R < 50, it is determined to be a holding the camera vertically. Other than those are determined to be failures of the determination. Thus, the gravity direction can be determined by information on the position of the retention mechanism.

The imaging apparatus having image-blur suppression mechanism and a control method thereof according to an embodiment of the invention is that the optical compensator performs the image-blur compensation without an incongruity such as the image shift and so on and determines the gravity direction, which is effective for the compensation of the camera shake when photographing.

According to the imaging apparatus and the control method as described above, an image shift is compensated by the optical compensator and the gravity direction is determined by plural pieces of information on the position of the optical compensator.

According to the present invention, the optical compensator, prevents the incongruity such as the image shift and so on from occurring, and is possible to determine the gravity direction.

Although the present invention has been described in terms of exemplary embodiments, it is not limited hereto. It should be appreciated that variations may be made in the embodiments described by persons skilled in the art without departing from the scope of the present invention as defined by the following claims.

**Claims**

1. An imaging apparatus having an image-blur suppression function, the imaging apparatus comprising:

    a body (1000);
    an image pick up device (101) configured to capture an image;
    a display (1') configured to display the image from the image pick up device (101);
    a shake detector (1241) configured to detect a shake applied to the body (1000);
    an optical compensator (1251) configured to compensate an image-blur occurred by the shake;
    a position detector (1252) configured to detect a position of the optical compensator (1251);
    a driver (1255) configured to drive the optical compensator (1251) according to an output from the shake detector (1241) and an output from the position detector (1252);
    a mechanical retainer (1263) configured to mechanically retain the optical compensator (1251) at a predetermined position; and
    a processor (104) configured to stop updating the image displayed on the display (1') when the mechanical retaining of the optical compensator (1251) by the mechanical retainer (1263) is released from a state in which the optical compensator (1251) is retained at the predetermined position by the mechanical retainer (1263) and in which the driver (1255) is stopped so as not to perform a compensation operation of the optical compensator (1251), and which detects the position of the optical compensator (1251) with the position detector (1252) during a period in which the updating of the image displayed on the display is stopped.

2. An imaging apparatus according to claim 1, wherein said processor (104) is configured to retain plural pieces of information on the position of the optical compensator detected during the period in which the updating of the image displayed on the display is stopped.

3. An imaging apparatus according to claim 2, wherein said processor (104) determines a gravity direction by using the retained plural pieces of the information.

4. An imaging apparatus according to claim 3, wherein the processor (104) determines the gravity direction in a first release condition in which a release switch (SW1) is half-pressed or in a second release condition in which the release switch (SW1) is further pressed from the first release condition.

5. An imaging apparatus according to any one of claims 1 to 4, wherein the processor (104) cancels the determination of the gravity direction when the output from the shake detector (1241) exceeds a predetermined range of value.

6. A method for controlling an imaging apparatus having an image-blur suppression function, the imaging apparatus comprising:

    a body (1000);
    an image pick up device (101) configured to capture an image;
    a display (1') configured to display the image from the image pick up device (101);
    a shake detector (1241) configured to detect a shake applied to the body (1000);
    an optical compensator (1251) configured to compensate an image-blur occurred by the shake;
    a position detector (1252) configured to detect a position of the optical compensator (1251);
    a driver (1255) configured to drive the optical compensator (1251) according to an output from the shake detector (1241) and an output from the position detector (1252); and
    a mechanical retainer (1263) configured to mechanically retain the optical compensator (1251) at a predetermined position,

said method comprising:

stopping updating of the image displayed on the display (1') when the mechanical retaining of the optical compensator (1251) by the mechanical retainer (1263) is released from a state in which the optical compensator (1251) is retained at the predetermined position by the mechanical retainer (1263) and in which the driver (1255) is stopped so as not to perform a compensation operation of the optical compensator (1251); and

detecting the position of the optical compensator (1251) with the position detector (1252) during a period in which the updating of the image displayed on the display is stopped.

7.  A control method according to claim 6, further comprising:

retaining plural pieces of information on the position of the optical compensator (1251) detected during the period in which the updating of the image displayed on the display (1') is stopped.

8.  A control method according to claim 7, further comprising:

determining a gravity direction by using the retained plural pieces of the information.

9.  A control method according to claim 8, wherein the determining the gravity direction is performed in a first release condition in which a release switch (SW1) is half-pressed or in a second release condition when the release switch (SW1) is further pressed from the first release condition.

10. A control method according to any one of claims 6 to 9, wherein the determining the gravity direction is cancelled when the output from the shake detector (1241) exceeds a predetermined range of value.

11. A computer program comprising program code means that, when executed on a computer system, instructs an imaging apparatus to carry out the steps according to any one of claims 6 to 10.

12. A computer readable storage medium having recorded thereon program code means that, when executed on a computer system, instructs an imaging apparatus to carry out the steps according to any one of claims 6 to 10.

# FIG.1A

DIGITAL STILL CAMERA
BODY 1000

RELEASE SWITCH
SW1

MODE DIAL SWITCH
SW2

SUB LCD
1

888

# FIG.1B

SW1    SW2    STROBOSCOPIC
LIGHT
3

5 RANGING UNIT

4 OPTICAL
FINDER

LID OF MEMORY CARD/
BATTERY LOADING ROOM
2

6 REMOTE-
CONTROL
RECEIVING
LIGHT
SECTION

7 LENS BARREL UNIT

# FIG.1C

1' LCD(LIQUID CRYSTAL DISPLAY) MONITOR

SW3: WIDE ANGLE DIRECTION ZOOM SWITCH
SW4: TELEPHOTO DIRECTION ZOOM SWITCH
SW5: SELF TIMETR SWITCH
SW6: MENU SWITCH
SW7: UPWARD MOVEMENT/STROBOSCOPIC LIGHT SETTING SWITCH
SW8: RIGHT MOVEMENT SWITCH
SW9: DISPLAY SWITCH
SW10: DOWNWARD MOVEMENT/MACRO-SWITCH
SW11: LEFT MOVEMENT/IMAGE CONFIRMATION SWITCH
SW12: OK SWITCH
SW13: POWER SWITCH
SW14: SWITCH FOR SUPPRESING IMAGE-BLUR

| FIG. 2 | | | |
|---|---|---|---|
| FIG. 2A | FIG. 2B | FIG. 2C | FIG. 2D |

PHOTOGRAPHING
OPTICAL
UNIT

# FIG. 2A

LENS BARREL UNIT 7

| ZOOM OPTICAL SYSTEM 71 | FOCUS OPTICAL SYSTEM 72 | APERTURE STOP UNIT 73 | MECHANICAL SHUTTER UNIT 74 |
|---|---|---|---|
| ZOOM LENSES 71a | FOCUS LENSES 72a | APERTURE STOP 73a | MECHANICAL SHUTTER 74a |

101 — CCD

1251 — CCD STAGE

ACTUATOR

1255

| ZOOM MOTOR | FOCUS MOTOR | APERTURE STOP MOTOR | MECHANICAL SHUTTER MOTOR |
|---|---|---|---|
| 71b | 72b | 73b | 74b |

75 — MOTOR DRIVER

1153 — MICHROPHONE (MIKE)

1152 — MIKE AMP (AMPLIFIER)

1151 — SOUND RECORDING CIRCUIT

SPEAKER

AUDIO AMP

SOUND REPRODUCING CIRCUIT

1163     1162     1161

# FIG. 2B

RETENTION MECHANISM — 1263

STEPPING MOTOR — STM

DRIVER

POSITION DETECTING ELEMENT — 1252

AMPLIFIER — 1253

GYRO SENSOR — 1241

LPF-AMPLIFIER — 1242

102 — F/E-IC

CDS — 1021

AGC — 1022

A/D CONVERSION SECTION — 1023

TG — 1024

VD-HD SIGNAL

FIRST AND SECOND MD DRIVERS — 1254

AD CONVERTER IC — 1256

STROBOSCOPIC LIGHT EMITTING SECTION

STROBOSCOPIC CIRCUIT — 114

3

RANGING UNIT — 5

SUB LCD — 1

LCD DRIVER — 111

SUB-CPU — 109

AF LED — 8

STROBOSCOPIC LED — 9

REMOTE-CONTROL RECEIVING LIGHT SECTION — 6

OPERATION KEY UNIT (SW1-14) — 115

BUZZER — 113

# FIG. 2C

103

**SDRAM**

| RAW-RGB IMAGE DATA | YUV IMAGE DATA | JPEG IMAGE DATA |
|---|---|---|

104 — **DIGITAL STILL CAMERA PROCESSOR**

| | |
|---|---|
| 10411 — A/D CONVERTER | USB BLOCK —1045 |
| 1041 — FIRST CCD SIGNAL PROCESSING BLOCK | SERIAL BLOCK —1046 |
| 1042 — SECOND CCD SIGNAL PROCESSING BLOCK | JPEG/ CODEC BLOCK —1047 |
| 1043 — CPU BLOCK | RESIZE BLOCK —1048 |
| 1044 — LOCAL SRAM | TV SIGNAL DISPLAY BLOCK —1049 |
| | MEMORY CARD CONTROLLER BLOCK —10410 |

BUS LINE

107 — RAM

INTERNAL MEMORY —120

108 — ROM

CONTROL PROGRAM

# FIG. 2D

USB CONNECTOR ~122

SERIAL DRIVER CIRCUIT ~1231    RS-232C CONNECTOR ~1232

LCD DRIVER ~117    LCD MONITOR ~1'

VIDEO AMP ~118    VIDEO JACK ~119

121

MEMORY CARD SLOT    ← MEMORY CARD

# FIG.3

# FIG.4A

```
        ( START )
            │
S11         ▼
    ┌─────────────────┐
    │     SETTING     │
    │ COUNTDOWN TIMER │
    │  FOR X SECONDS  │
    └─────────────────┘
            │
S12         ▼
    ┌─────────────────┐
    │ START COUNTING  │
    └─────────────────┘
            │
S13         ▼
    ┌─────────────────┐
    │  INTERRUPTION   │
    │ AFTER X SECONDS·│
    │ PERFORMING STEP │
    │ BY INTERRUPTION │
    └─────────────────┘
            │
            ▼
         ( END )
```

# FIG.4B

```
                    ┌─────────────┐
                    │    START    │
                    └──────┬──────┘
                           │
S11'                       ▼
              ┌────────────────────────┐
              │        SETTING         │
              │     FREE-RUN TIMER     │
              │      FOR X SECONDS     │
              └───────────┬────────────┘
                          │
S12                       ▼
              ┌────────────────────────┐
              │     START COUNTING     │
              └───────────┬────────────┘
                          │
S13                       ▼
              ┌────────────────────────┐
              │      INTERRUPTION       │
              │   AFTER X SECONDS·      │
              │    PERFORMING STEP      │
              │    BY INTERRUPTION      │
              └───────────┬────────────┘
                          │
S14                       ▼
                    ◆─────────────◆
                    │    RESET     │   No
                    │   COMMAND?   ├──────►
                    ◆─────────────◆
                          │ Yes
                          ▼
                    ┌─────────────┐
                    │     END     │
                    └─────────────┘
```

24

# FIG.5

θ

LENS

CCD PLANE

θ

LENS

FOCAL LENGTH

Y

P2

X DIRECTION
MOVEMENT

θy

O'

θx

dy

O

dx

x

P1 CCD PLANE

Y DIRECTION
MOVEMENT

# FIG.6

CORNER PORTION
10a

STEPPING MOTOR
STM

A

101 CCD

16d

FLEXIBLE PRINTED
SUBSTRATE 20

16b

16a

CORNER PORTION 10b

16c

CCD STAGE 1251

A'

10 FIXED BARREL

16a–16d:PERMANENT MAGNET

X

Y

# FIG.7

26 FORCED PRESS PLATE

19

101

20

HELICOID 12

1251

11

11

10

# FIG.8A

ENGAGING PROJECTION 11d

10 COILED BODY COL1'

ONE END PORTION 34b

WINDING PORTION 34a

11c COIL ATTCHING PROJECTION

34 TORSION COIL SPRING

34c OTHER END PORTION

11a POSITION DETERMINING PROJECTION

26c GUIDE AXIS

11b POSITION DETERMINING PROJECTION

26

COILED BODY COL2'

11

COILED BODY COL2

19 PROTECTION PLATE

COILED BODY COL1

35 GRIPPING BAR

X

Y

# FIG.8B

# FIG.9

MOUNT STAGE
15

1252a, 1252b : HALL ELEMENT
1252 : POSITION DETECTION ELEMENT

COL2  15a  RECESS
PORTION  15d  101  COL1'
19a

19  1252a
1252
15c  1252b

COL1  COL2'

15b

Y DIRECTION STAGE
14  17a'

17a  14d

1251

14c

17b'
X DIRECTION STAGE  17b
13

16d
16a

13a

16c  16b
13b

13a,13b,14c,14d : GUIDE AXIS
17a,17a',17b,17b' : SUPPORTED PORTION

# FIG.10

23: ROTATION TRANSFERRING GEAR
24: RECIPROCATE SHAFT
25: BIASING COILED SPRING
26: FORCED PRESS PLATE
27: SPRING BEARING MEMBER

# FIG.11A

# FIG.11B

# FIG.12A

INCLINATION ENDING 31f
POSITION

FLAT PEAK 31b

CLIFF 31d

FLAT
VALLEY FLOOR 31a

INCLINATION
STARTING POSITION 31e

INCLINATION 31c
SURFACE

31

23

24

C

C'

# FIG.12B

23

31e

31c

31a

31d

31f

31

31b

# FIG.12C

24

23

31c

31b

31f

31

32

# FIG.12D

24

23

31a

31

31d

31b

31f

31c

# FIG.12E

24

31a

23

31d

31c

31e

31b

31

32

EP 1 933 545 A1

## FIG.13A

26  33

19a  19b PERIPHERAL WALL OF RECESS PORTION

19

33a PERIPHERAL WALL

## FIG.13B

26  33

19a  33a  19b

19

## FIG.14

$\Delta x$

$\theta$

FOCAL LENGTH $(\mu m)$

# FIG.15

COMPENSATION
AMOUNT 200

COMPENSATION
AMOUNT 135

COMPENSATION
AMOUNT 28

# FIG.16A

# FIG.16B

# FIG.17

START

S20

No ◁ IS FLAG 1? ▷

Yes

S21

ALL VALUES OF
COUNTDOWN TIMERS
> 2 × T ——No——▶ SETTING FLAG
FOR 0   S22

Yes

S23

VALUE OF
COUNTER MULTIPLES
OF 4+3 ——Yes——▶

No

S24

VALUE OF
COUNTER MULTIPLES
OF 4+2 ——Yes——▶

No

S25

VALUE OF
COUNTER MULTIPLES
OF 4+1 ——Yes——▶

No

| S26 | S27 | S28 | S29 |
|---|---|---|---|
| DETECTING·CALCULATING ANGLE IN YAW DIRECTION SETTING TARGET VALUE SERVO CONTROL | SERVO CONTROL | DETECTING·CALCULATING ANGLE IN PITCH DIRECTION SETTING TARGET VALUE SERVO CONTROL | SERVO CONTROL |

S30

ADDING 1 TO
COUNTER VALUE

END

# FIG.18

UPPER LIMIT OF
TARGET VALUE

TARGET VALUE

LOWER LIMIT OF
TARGET VALUE

CONTROL PER T [s]

# FIG.19

START

S31 IMAGE-BLUR SUPPRESSION BUTTON ON

S32 POWER SWITCH FOR GYRO SENSOR ON

S33 HALF-PRESSED RELEASE SWITCH SW1/ END OF FIRST RELEASE CONDITON STEP

S34 DECIDING CONTROL CYCLE

S35 SETTING FREE CCD STAGE START OF CCD CENTER RETENTION CONTROL

S37 FIXING CCD STAGE

S36 FIRST RELEASE CONDITION CONTINUE? — No / Yes

S38 SECOND RELEASE CONDITION? — No / Yes

S39 DECIDING CONTROL CYCLE

S40 CHANGING CONTROL CYCLE

S41 START OF TRACKING CCD

S42 EXPOSURE

S43 END OF EXPOSURE

S44 END OF TRACKING CCD START OF CCD CENTER RETENTION CONTROL

S45 CCD CENTER RETENTION END? — No / Yes

S46 FIXING CCD STAGE

END

# FIG.20

SECOND RELEASE
CONDITION STEP
     NOT PERFORMED
      PERFORMED

MECHANICAL SHUTTER   OPEN
           CLOSE

EXPOSURE

LIGHT
EMITTING

MECHANICAL SHUTTER
     CLOSING STEP

FLASHING LIGHT EMITTING
      START STEP

FLASHING LIGHT EMITTING
       END STEP

IMAGE-BLUR SUPPRESSION
       STEP A
IMAGE-BLUR SUPPRESSION
       STEP B

TIME ⟶

# FIG.21

# FIG.22A

| START | START | START |
|---|---|---|

**S11**

| SETTING COUNTDOWN TIMER 1 FOR A SECONDS | SETTING COUNTDOWN TIMER 2 FOR B SECONDS | SETTING COUNTDOWN TIMER 3 FOR C SECONDS |
|---|---|---|

**S12**

| START COUNTING WHEN EXPOSURE STARTS | START COUNTING WHEN EXPOSURE STARTS | START COUNTING WHEN EXPOSURE STARTS |
|---|---|---|

**S13**

| INTERRUPTION AFTER A SECONDS ·PERFORMING FLASHING LIGHT START STEP SETTING FLAG FOR 1 | INTERRUPTION AFTER B SECONDS ·PERFORMING FLASHING LIGHT END STEP SETTING FLAG FOR 1 | INTERRUPTION AFTER C SECONDS ·PERFORMING SHUTTER CLOSING STEP SETTING FLAG FOR 1 |
|---|---|---|

| END | END | END |
|---|---|---|

# FIG.22B

START

**S11** SETTING FREE-RUN TIMER FOR T SECONDS

**S12** START COUNTING JUST BEFORE EXPOSURE

**S13** INTERRUPTION AFTER T SECONDS·PERFORMING IMAGE-BLUR SUPPRESSION STEP

**S14** RESET COMMAND? — No

Yes

END

# FIG.23

UPPER LIMIT OF
TARGET VALUE

TARGET VALUE

LOWER LIMIT OF
TARGET VALUE

STOP CONTROL

RESTART CONTROL

# FIG.24

```
                        ┌─────────────┐
                        │   START     │
                        └─────────────┘
                               │
                               ▼
      No          S20      ◇ IS FLAG 1? ◇
   ◄─────────────────────
   │                             │ Yes
   │                             ▼
   │        S21     ◇ ALL VALUES OF        No
   │                 COUNTDOWN TIMERS ◇─────────┐
   │                    > 2 × T                 │
   │                      │ Yes                 ▼
   │                      │              ┌──────────────┐  S22
   │                      │              │ SETTING FLAG │
   │                      │              │   FOR 0      │
   │                      │              └──────────────┘
   │                      │                     │
   │                      ◄─────────────────────┘
   │                      │
   │         S23          ▼        Yes
   │                ◇ VALUE OF ◇──────────────────────────────┐
   │                 COUNTER MULTIPLES                         │
   │                    OF 4+3                                 │
   │                      │ No                                 │
   │         S24          ▼        Yes                         │
   │                ◇ VALUE OF ◇──────────────┐                │
   │                 COUNTER MULTIPLES        │                │
   │                    OF 4+2                │                │
   │                      │ No                │                │
   │         S25          ▼        Yes        │                │
   │                ◇ VALUE OF ◇────────┐     │                │
   │                 COUNTER MULTIPLES  │     │                │
   │                    OF 4+1          │     │                │
   │                      │ No          │     │                │
 ┌──────────┐  ┌──────────┐ ┌────────┐ ┌──────────┐ ┌────────┐
 │S31       │  │S26       │ │S27     │ │S28       │ │S29     │
 │ SETTING  │  │ANGULAR   │ │        │ │ANGULAR   │ │        │
 │ELECTRIC  │  │VELOCITY  │ │SERVO   │ │VELOCITY  │ │SERVO   │
 │CURRENT   │  │DETECTION │ │CONTROL │ │DETECTION │ │CONTROL │
 │VALUE TO  │  │AND ANGLE │ │        │ │AND ANGLE │ │        │
 │COILED    │  │CALCULATION│ │       │ │CALCULATION│ │       │
 │BODY      │  │IN YAW    │ │        │ │IN PITCH  │ │        │
 │          │  │DIRECTION │ │        │ │DIRECTION │ │        │
 └──────────┘  └──────────┘ └────────┘ └──────────┘ └────────┘
```

**S31** SETTING ELECTRIC CURRENT VALUE TO COILED BODY

**S26** ANGULAR VELOCITY DETECTION AND ANGLE CALCULATION IN YAW DIRECTION SETTING TARGET VALUE SERVO CONTROL

**S27** SERVO CONTROL

**S28** ANGULAR VELOCITY DETECTION AND ANGLE CALCULATION IN PITCH DIRECTION SETTING TARGET VALUE SERVO CONTROL

**S29** SERVO CONTROL

**S30** ADDING 1 TO COUNTER VALUE

END

# FIG.25

EXPOSURE

LIGHT
EMITTING

MECHANICAL SHUTTER
CLOSING STEP

FLASHING LIGHT
EMITTING START STEP

FLASHING LIGHT
EMITTING END STEP

$F < 2 \times T$

IMAGE-BLUR SUPPRESSION
STEP A

IMAGE-BLUR SUPPRESSION
STEP B

EP 1 933 545 A1

# FIG.26

FLASHING LIGHT EMITTING
START STEP

NOT PERFORMED

PERFORMED

2×T

IMAGE-BLUR SUPPRESSION STEP

CASE 1

CASE 2

IMAGE-BLUR COMPENSATION
INTERRUPTION WITHIN RANGE OF
2×T FOR FIRST TIME

# FIG.27

WORKING PERIOD OF RETENTION MECHANISM

| EXPOSURE OF IMAGE FOR A PLANE | EXPOSURE OF IMAGE FOR B PLANE | EXPOSURE OF IMAGE FOR C PLANE | EXPOSURE OF IMAGE FOR A PLANE | EXPOSURE OF IMAGE FOR B PLANE | |
|---|---|---|---|---|---|
| | SDRAM FORWARDING IMAGE TO A PLANE | SDRAM FORWARDING IMAGE TO B PLANE | SDRAM FORWARDING IMAGE TO C PLANE | SDRAM FORWARDING IMAGE TO A PLANE | SDRAM FORWARDING IMAGE TO B PLANE |
| | DISPLAYING IMAGE OF C PLANE | DISPLAYING IMAGE OF A PLANE | DISPLAYING IMAGE OF B PLANE | DISPLAYING IMAGE OF C PLANE | DISPLAYING IMAGE OF A PLANE | DISPLAYING IMAGE OF B PLANE |

PERIOD OF HAVING INCONGRUITY FOR MONITORING

ta        tb        tc        td        te        tf        tg        TIME

EP 1 933 545 A1

**European Patent Office**

**EUROPEAN SEARCH REPORT**

Application Number

EP 07 25 4876

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 540 046 B (CANON KK [JP]) 6 September 2000 (2000-09-06) * abstract * ----- | 1-12 | INV. H04N1/21 H04N5/232 G02B27/64 |
| A | EP 1 607 792 A (CANON KK [JP]) 21 December 2005 (2005-12-21) * abstract * * paragraph [0002] - paragraph [0008] * ----- | 1-12 | |

| | TECHNICAL FIELDS SEARCHED (IPC) |
|---|---|
| | H04N G02B |

The present search report has been drawn up for all claims

| Place of search | Date of completion of the search | Examiner |
|---|---|---|
| The Hague | 11 April 2008 | Stoffers, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 07 25 4876

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2008

| Patent document cited in search report | | Publication date | Patent family member(s) | | Publication date |
|---|---|---|---|---|---|
| EP 0540046 | B | 06-09-2000 | DE | 69231414 D1 | 12-10-2000 |
| | | | DE | 69231414 T2 | 01-03-2001 |
| | | | EP | 0540046 A2 | 05-05-1993 |
| EP 1607792 | A | 21-12-2005 | CN | 1716075 A | 04-01-2006 |
| | | | JP | 2006003439 A | 05-01-2006 |
| | | | KR | 20060049600 A | 19-05-2006 |
| | | | US | 2005276590 A1 | 15-12-2005 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001066655 A
- JP 3188739 B

- JP 2005323405 A